# FASCICULE DE BREVET EUROPEEN

(11) **EP 3 245 110 B1**
(45) Date de publication et mention de la délivrance du brevet: **20.02.2019**
(21) Numéro de dépôt: 15823374.2
(22) Date de dépôt: 30.12.2015
(51) Int. Cl.: B60T 13/26, B61H 5/00, B60T 13/66, B60T 17/16, F16D 55/224

(54) **SYSTÈME DE FREINAGE FERROVIAIRE POUR VÉHICULE FERROVIAIRE ET PROCÉDÉ DE FREINAGE D'UN VÉHICULE FERROVIAIRE COMPORTANT UN TEL SYSTÈME**
BREMSSYSTEM FÜR SCHIENENFAHRZEUGE UND BREMSVERFAHREN FÜR EIN SCHIENENFAHRZEUG MIT EINEM SOLCHEN SYSTEM
BRAKE SYSTEM FOR RAILWAY VEHICLES AND BRAKING METHOD FOR A VEHICLE WITH SUCH A SYSTEM

(30) Priorité: 13.01.2015 FR 1550255
(43) Date de publication de la demande: 22.11.2017
(73) Titulaire: Faiveley Transport Amiens, 80000 Amiens (FR)
(72) Inventeur: GONCALVES, Claudino, 80620 Ribeaucourt (FR); FERRON, Evi, 80800 Vecquemont (FR); BOISSEAU, Gilles, 80090 Amiens (FR); SELLIER, Louis, 80800 Villers Bretonneux (FR)
(74) Mandataire: Santarelli
(86) Numéro de dépôt international: PCT/FR2015/053768
(87) Numéro de publication internationale: WO 2016/113484

(56) Documents cités:
- EP-A1- 2 154 040
- WO-A1-94/15821
- US-A- 3 874 747

## Description

L'invention concerne le domaine du freinage des véhicules ferroviaires.

Elle concerne plus particulièrement les systèmes de freinage ferroviaires pour véhicule ferroviaire pourvus d'un frein de service et d'un frein de parking configurés pour agir sur une timonerie de freinage.

Elle concerne également les procédés de freinage de véhicules ferroviaires comportant de tels systèmes de freinage.

Les véhicules ferroviaires sont généralement équipés de cylindres de frein de service comportant un piston mobile sous l'effet d'un fluide sous pression, le déplacement de ce piston entraînant une action de freinage telle que le serrage d'un disque de frein entre deux garnitures, ou la pression directe d'une semelle contre une roue du véhicule.

Ces cylindres de frein comportent également généralement un actionneur de parking ou de secours qui est activé en cas de perte de pression du fluide sous pression et/ou en cas de vidange volontaire ou de fuite du système pneumatique. Cet actionneur, appelé aussi frein de parking, permet d'assurer le freinage grâce à la force d'un ressort se substituant à la force du fluide. Une fois ce frein de parking activé, le frein reste serré en permanence.

On connaît de la demande de brevet européen EP 2 154 040 un système de freinage ferroviaire pourvu d'un actionneur de frein de parking accouplé à un cylindre de frein de service ferroviaire. Ce cylindre de frein comporte un corps et un piston mobile par rapport au corps pour agir sur la timonerie de freinage par l'intermédiaire d'une tige de poussée.

Le cylindre de frein comporte également une chambre de pression délimitée par le piston et par le corps et qui est raccordée par un conduit à une source d'agent de pression pneumatique pour mettre le piston dans une position de freinage de service.

Le frein de parking comporte quant à lui un corps distinct du corps du cylindre de frein. Le corps du frein de parking présente une ouverture en vis-à-vis du piston du cylindre de frein de service, laquelle ouverture reçoit à coulissement un manchon de poussée s'ajustant dans cette ouverture de manière étanche.

Le frein de parking comporte également un piston monté mobile dans un cylindre solidaire du corps et délimitant avec le corps une chambre de pression de frein de parking. Cette chambre de pression de frein de parking est raccordée à une autre source d'agent de pression pneumatique via un conduit. Le piston comporte en son centre un orifice traversé par le manchon de poussée.

Le frein de parking comporte en outre des ressorts qui sollicitent en permanence le piston de ce frein de parking vers une position dite basse où le frein de parking est considéré comme étant dans une configuration de travail.

Pour actionner le frein de parking lorsque le piston du cylindre de frein de service est en position de freinage de service, la chambre de pression du frein de parking (préalablement remplie avec l'agent de pression pneumatique) est vidangée et les ressorts du frein de parking agissent alors sur le piston du frein de parking, lequel entraîne le manchon jusqu'à ce que ce dernier vienne en appui contre le piston du cylindre de frein de service.

La chambre de pression du cylindre de frein de service peut alors être vidangée puisque le frein de parking est actionné.

La force appliquée par le frein de parking sur le piston de frein de service est directement fonction de la force développée par les ressorts. Cette force est fonction bien entendu de la raideur et de l'allongement de ces ressorts.

Avec ce système de freinage, l'effort appliqué par le piston du cylindre de frein de service lorsque le frein de parking est actionné et le cylindre de frein de service est vidangé sur la timonerie de freinage est souvent inférieur à l'effort appliqué par ce même piston lorsqu'il est en position de freinage de service.

L'invention concerne un système de freinage pour véhicule ferroviaire, présentant des performances améliorées par rapport aux systèmes de freinage de l'art antérieur susmentionnés, tout en étant simple, commode et économique.

L'invention a ainsi pour objet, sous un premier aspect, un système de freinage ferroviaire pour véhicule ferroviaire à freins à au moins une garniture ou à au moins une semelle, comportant :
- un corps ;
- une timonerie de freinage configurée pour agir sur au moins un dit frein à au moins une garniture ou à au moins une semelle ;
- un frein de service comportant un piston de freinage mobile par rapport audit corps pour agir sur ladite timonerie de freinage et délimitant avec ledit corps une chambre de pression de frein de service configurée pour être alimentée par une première source d'agent de pression pneumatique pour mettre ledit piston de freinage dans une position de freinage de service ; et
- un frein de parking configuré pour agir sur ledit piston de freinage dudit frein de service et admettant une configuration de travail et une configuration de repos ;
ledit système de freinage ferroviaire étant caractérisé en ce que ledit frein de parking comporte :
- un dispositif de blocage mobile par rapport audit corps pour agir sur ledit piston de freinage et admettant une première position et une seconde position dans laquelle ledit dispositif de blocage est configuré pour immobiliser ledit piston de freinage en position de freinage de service, ledit frein de parking étant alors en configuration de travail ;
- un dispositif de commande mobile par rapport audit corps et admettant une position de verrouillage dans laquelle ledit dispositif de commande est configuré pour maintenir ledit dispositif de blocage dans sa seconde position ;
avec ledit système de freinage ferroviaire qui est configuré pour que, lorsque ledit dispositif de commande est dans sa position de verrouillage, ladite chambre de pression de frein de service est alimentée par une deuxième source d'agent de pression pneumatique, dont la valeur de pression est déterminée, afin d'appliquer, lorsque ledit frein de parking est en configuration de travail, un effort de freinage déterminé ;
ledit système de freinage ferroviaire comportant en outre une unité de contrôle et de commande configurée pour :
- recevoir une information représentative d'une valeur de ladite première source d'agent de pression pneumatique ;
- traiter une information représentative d'une consigne de frein de parking au moins dans sa configuration de travail, en vue d'actionner ledit dispositif de commande mobile au moins dans sa position de verrouillage ; et
- déterminer une valeur de ladite deuxième source d'agent de pression en fonction de ladite consigne de frein de parking et de ladite information représentative d'une valeur de ladite première source d'agent de pression pneumatique, en vue d'alimenter ladite chambre de pression de frein de service.

Dans le système de freinage selon l'invention, le piston de freinage est immobilisé en position de freinage de service par le frein de parking et en particulier par son dispositif de blocage. Cela signifie que le piston de freinage peut être immobilisé dans n'importe quelle position, laquelle position est liée à la course que ce piston a parcourue et cette course dépend de l'effort appliqué lors de la phase de freinage de service.

On entend par le terme immobiliser le fait que l'effort appliqué par le piston de freinage sur la timonerie de freinage dans la configuration de travail du frein de parking ne diminue pas, ou presque pas.

On admet tout de même une certaine perte liée au recul du piston de freinage, en particulier au léger déplacement du piston par rapport au dispositif de blocage, au moment où la chambre de pression de frein de service est vidangée. Cette perte est maîtrisée et se définit par une très légère diminution de l'effort appliqué qui est due notamment aux tolérances de fabrication à la fois du dispositif de blocage et du piston de freinage. Cette diminution de l'effort appliqué sur la timonerie de freinage est ici appelée pertes au recul. Une valeur acceptable de ces pertes au recul est au maximum de l'ordre de 10% à 15% de l'effort appliqué par le frein de service à l'instant où le frein de parking est actionné pour être en configuration de travail.

Grâce à l'invention et en particulier à la configuration du piston de freinage et du frein de parking, on s'affranchit notamment des ressorts des systèmes de freinage connus décrits ci-dessus qui permettent d'appliquer l'effort de frein de parking sur la timonerie de freinage par l'intermédiaire du piston du cylindre de frein de service. Ainsi, pour un même effort appliqué sur la timonerie de freinage lorsque le frein de parking est en configuration de travail, le système de freinage selon l'invention est plus compact que les systèmes de freinage de l'art antérieur susmentionnés, et également plus léger.

On notera que la timonerie de freinage présente avantageusement des bras déformables dont l'élasticité peut se substituer à celle des ressorts des systèmes de freinage connus décrits ci-dessus.

On notera que la configuration du frein de parking est choisie de telle sorte que la force appliquée directement par le dispositif de blocage pour immobiliser le piston de freinage n'est généralement pas supérieure à la force appliquée par les ressorts sur le piston des systèmes de freinage de l'art antérieur susmentionnés ; alors que l'effort appliqué sur la timonerie de freinage lorsque le frein de parking du système selon l'invention est en configuration de travail est de préférence au moins égal voire supérieur à celui procuré par les systèmes de freinage de l'art antérieur susmentionnés.

Grâce à sa configuration, le système de freinage selon l'invention peut en outre permettre d'alimenter momentanément la chambre de pression de frein de service avec la deuxième source d'agent de pression pneumatique afin d'augmenter l'effort de freinage appliqué sur la timonerie de freinage par le piston de frein de service. L'effort de freinage appliqué sur la timonerie de freinage lorsque le frein de parking est dans sa configuration de travail en est donc d'autant augmenté.

Le système selon l'invention peut ainsi permettre d'obtenir des efforts de freinage de frein de service et de frein de parking supérieurs à ceux obtenus avec les systèmes de freinage de l'art antérieur susmentionnés, de manière simple, commode et économique, tout en étant particulièrement sécuritaire.

En outre, l'unité de contrôle et de commande du système selon l'invention permet de gérer de manière simple et commode au moins la valeur de pression de la deuxième source d'agent de pression pneumatique qui alimente la chambre de pression de frein de service lorsque le frein de parking est dans sa configuration de travail. Cette valeur de pression est ici gérée en fonction de la valeur de pression de ladite première source d'agent de pression pneumatique qui sert à alimenter la chambre de frein de service notamment lorsque le frein de parking n'est pas dans sa configuration de travail et en fonction d'une consigne de frein de parking.

On notera que la première source d'agent de pression pneumatique permet généralement d'alimenter, lorsque le frein de parking n'est pas en configuration de travail, la chambre de pression de frein de service pour appliquer un effort de freinage de service, conformément à une consigne de frein de service. Cette même première source d'agent de pression pneumatique peut également permettre d'alimenter, lorsque le frein de parking n'est pas en configuration de travail, la chambre de pression de frein de service pour appliquer un effort de freinage d'urgence plutôt que de service, conformément à une consigne de frein d'urgence.

Il peut être considéré ici que l'effort de frein d'urgence est un effort de frein de service modifié par un paramètre d'urgence. Par conséquent, les libellés utilisés ci-après concernant les valeurs et valeurs pilotes de ladite première source d'agent de pression pneumatique ainsi que les consignes de frein de service englobent à la fois les actions pour appliquer un effort de frein de service comme décrit plus haut et les actions pour appliquer un effort de frein d'urgence.

Selon des caractéristiques préférées, simples, commodes et économiques du système selon l'invention :
- ladite information représentative de ladite valeur de ladite première source d'agent de pression pneumatique et ladite information représentative de ladite consigne de frein de parking correspondent chacune à un signal électrique ou pneumatique ou mécanique ;
- ledit dispositif de commande délimite avec ledit corps une chambre de pression de frein de parking configurée pour être alimentée par une troisième source d'agent de pression pneumatique, ladite unité de contrôle et de commande étant en outre configurée pour déterminer une valeur de ladite troisième source d'agent de pression en fonction de ladite consigne de frein de parking, en vue d'actionner ledit dispositif de commande mobile au moins dans sa position de verrouillage ;
- ledit dispositif de commande est configuré pour être actionné électriquement, ladite unité de contrôle et de commande étant en outre configurée pour déterminer une valeur d'une énergie électrique en fonction de ladite consigne de frein de parking, en vue d'actionner ledit dispositif de commande mobile au moins dans sa position de verrouillage ;
- ladite valeur de pression déterminée de ladite deuxième source d'agent de pression pneumatique est supérieure, égale ou inférieure à celle de ladite première source d'agent de pression pneumatique, afin d'appliquer, lorsque ledit frein de parking est en configuration de travail, un effort de freinage respectivement supérieur, égal ou inférieur à l'effort de freinage appliqué lorsque ledit piston de freinage est dans sa position de freinage de service et que ledit frein de parking est dans sa configuration de repos ;
- ladite unité de contrôle et de commande est en outre configurée pour déterminer une valeur corrigée de ladite première source d'agent de pression pneumatique et ladite valeur déterminée de ladite deuxième source d'agent de pression pneumatique est égale à ladite valeur corrigée ;
- ladite valeur déterminée de ladite deuxième source d'agent de pression pneumatique est constante ou variable en fonction de ladite information représentative reçue de ladite valeur de ladite première source d'agent de pression pneumatique ;
- ladite unité de contrôle et de commande est en outre configurée pour recevoir une information représentative d'une consigne de frein de service et pour déterminer ladite consigne de frein de parking en fonction de ladite information représentative reçue de ladite consigne de frein de service ; et/ou ladite unité de contrôle et de commande est configurée pour déterminer ladite consigne de frein de parking en fonction de ladite information représentative de ladite valeur de ladite première source d'agent de pression pneumatique, considérant qu'il peut s'agir directement d'une valeur de pression de ladite première source ou d'une valeur pilote de ladite première source ;
- ladite unité de contrôle et de commande est en outre configurée pour recevoir au moins une information représentative d'au moins un paramètre d'utilisation dudit véhicule ferroviaire et ladite valeur de ladite deuxième source d'agent de pression pneumatique est en outre déterminée en fonction de ladite au moins une information représentative dudit au moins un paramètre d'utilisation dudit véhicule ferroviaire ;
- ladite unité de contrôle et de commande est en outre configurée pour recevoir au moins une information représentative d'au moins un paramètre d'utilisation dudit véhicule ferroviaire et pour déterminer ladite consigne de frein de parking en fonction de ladite au moins une information représentative dudit au moins paramètre d'utilisation dudit véhicule ferroviaire ;
- ledit au moins un paramètre d'utilisation dudit véhicule ferroviaire est choisi parmi un paramètre de traction, un paramètre de vitesse, un paramètre de charge, un paramètre d'anti-enrayage, un paramètre de pression pneumatique et un paramètre d'énergie électrique ;
- ladite unité de contrôle et de commande est en communication fluidique avec un réseau de cheminement de conduites pneumatiques, lequel réseau comporte une conduite principale et une conduit générale configurées pour acheminer un fluide au moins sous une première pression prédéterminée, optionnellement un premier réservoir auxiliaire configuré pour stocker un fluide sous une deuxième pression prédéterminée et qui est connecté à ladite conduite principale, et/ou optionnellement encore un second réservoir auxiliaire configuré pour stocker un fluide sous une troisième pression prédéterminée et qui est connecté à ladite conduite principale ;
- ledit réseau de cheminement de conduites pneumatiques comporte en outre une première conduite d'alimentation connectée entre ladite unité de contrôle et de commande et ladite chambre de pression de frein de service et configurée pour acheminer un fluide sous pression issu d'au moins une des première et deuxième sources d'agent de pression pneumatique ;
- ledit réseau de cheminement de conduites pneumatiques comporte en outre une deuxième conduite d'alimentation connectée entre ladite unité de contrôle et de commande et ladite chambre de pression de frein de parking et configurée pour acheminer un fluide sous pression issu de la troisième source d'agent de pression pneumatique ;
- ledit réseau de cheminement de conduites pneumatiques comporte en outre une conduite intermédiaire dédiée configurée pour acheminer uniquement un fluide issu de ladite deuxième source d'agent de pression pneumatique lorsque ledit frein de parking est en configuration de travail, dans ladite chambre de pression de frein de service ;
- ladite unité de contrôle et de commande est configurée pour alimenter ladite chambre de pression de frein de service par l'intermédiaire de ladite conduite intermédiaire dédiée en shuntant ladite première conduite d'alimentation ;
- ladite unité de contrôle et de commande comporte un dispositif de relayage configuré pour recevoir, en entrée dudit dispositif de relayage, une valeur pilote de ladite première source d'agent de pression pneumatique, et pour générer et fournir, en sortie dudit dispositif de relayage, ladite valeur de ladite première source d'agent de pression pneumatique ; et ladite unité de contrôle et de commande est en outre configurée pour recevoir, en aval dudit dispositif de relayage, une valeur intermédiaire de ladite deuxième source d'agent de pression pneumatique qui se substitue ou se combine à ladite valeur de ladite première source d'agent de pression pneumatique pour générer ladite valeur déterminée de ladite deuxième source d'agent de pression pneumatique ;
- ladite unité de contrôle et de commande comporte un dispositif de relayage configuré pour recevoir, en entrée dudit dispositif de relayage, une valeur pilote de ladite première source d'agent de pression pneumatique et une valeur pilote de ladite deuxième source d'agent de pression pneumatique qui se substitue ou se combine à ladite valeur pilote de ladite première source d'agent de pression pneumatique, et pour générer et fournir, en sortie dudit dispositif de relayage, ladite valeur déterminée de ladite deuxième source d'agent de pression pneumatique ;
- ladite unité de contrôle et de commande comporte un dispositif de relayage configuré pour :
   - recevoir, en entrée dudit dispositif de relayage, une valeur pilote de ladite première source d'agent de pression pneumatique ;
   - recevoir, dans ledit dispositif de relayage, une valeur intermédiaire ou une valeur pilote de ladite deuxième source d'agent de pression pneumatique ; et
   - générer et fournir, en sortie dudit dispositif de relayage, ladite valeur déterminée de ladite deuxième source d'agent de pression pneumatique ;
- ladite unité de contrôle et de commande comporte un dispositif anti-enrayage et est configurée pour générer ladite valeur déterminée de ladite deuxième source d'agent de pression pneumatique à partir de ladite valeur de ladite première source d'agent de pression pneumatique et d'une valeur intermédiaire de ladite deuxième source d'agent de pression pneumatique qui se substitue ou se combine à ladite valeur de ladite première source d'agent de pression pneumatique ; soit en aval soit en amont dudit dispositif anti-enrayage ;
- ladite unité de contrôle et de commande comporte en outre un dispositif de génération de la valeur de ladite première source d'agent de pression pneumatique configuré pour recevoir, en entrée dudit dispositif de génération, une consigne de frein de service, et pour générer et fournir, en sortie dudit dispositif de génération, ladite valeur de ladite première source d'agent de pression pneumatique ; et ladite unité de contrôle et de commande est en outre configurée pour recevoir, en aval dudit dispositif de génération, une valeur intermédiaire de ladite deuxième source d'agent de pression pneumatique qui se substitue ou se combine à ladite valeur de ladite première source d'agent de pression pneumatique pour générer ladite valeur déterminée de ladite deuxième source d'agent de pression pneumatique ;
- ladite unité de contrôle et de commande comporte un dispositif de génération de la valeur de ladite première source d'agent de pression pneumatique configuré pour recevoir, en entrée dudit dispositif de génération, une consigne de frein de service et une consigne de frein de parking qui se substitue ou se combine à ladite consigne de frein de service, et pour générer et fournir, en sortie dudit dispositif de génération, ladite valeur déterminée de ladite deuxième source d'agent de pression pneumatique ; et/ou
- ladite unité de contrôle et de commande comporte un dispositif de génération de la valeur de ladite première source d'agent de pression pneumatique configuré pour :
   - recevoir, en entrée dudit dispositif de génération, une consigne de frein de service ;
   - recevoir, dans ledit dispositif de génération, une consigne de frein de parking ou une valeur intermédiaire de ladite deuxième source d'agent de pression pneumatique ; et
   - générer et fournir, en sortie dudit dispositif de génération, ladite valeur déterminée de ladite deuxième source d'agent de pression pneumatique ; et/ou
- ladite unité de contrôle et de commande est en outre configurée pour recevoir au moins une information représentative d'un paramètre de charge dudit véhicule ; déterminer un paramètre de charge fictive dudit véhicule en fonction de ladite consigne de frein de parking et/ou de ladite valeur déterminée de ladite deuxième source d'agent de pression pneumatique ; et substituer ledit paramètre de charge reçu par ledit paramètre de charge fictive déterminé.

L'invention a aussi pour objet, sous un deuxième aspect, un procédé de freinage d'un véhicule ferroviaire, comportant un système de freinage ferroviaire tel que décrit ci-dessus, comportant :
- l'étape de recevoir une information représentative d'une valeur de ladite première source d'agent de pression pneumatique ;
- l'étape d'alimenter la chambre de pression de frein de service dudit système avec ladite valeur de ladite première source d'agent de pression pneumatique de sorte à mettre ledit piston de freinage en position de freinage de service ;

- l'étape de traiter une information représentative d'une consigne de frein de parking au moins dans sa configuration de travail ;
- l'étape d'actionner ledit dispositif de commande mobile au moins dans sa position de verrouillage, en fonction de ladite consigne de frein de parking ; et
- l'étape de déterminer une valeur de ladite deuxième source d'agent de pression pneumatique en fonction de ladite consigne de frein de parking et de ladite information représentative d'une valeur de ladite première source d'agent de pression pneumatique, en vue d'alimenter ladite chambre de pression de frein de service.

Le procédé selon l'invention est particulièrement simple et commode à mettre en oeuvre.

Selon des caractéristiques préférées, simples, commodes et économiques du procédé selon l'invention, il comporte en outre l'étape d'alimenter ladite chambre de pression de frein de service avec ladite valeur de ladite deuxième source d'agent de pression pneumatique ; et l'étape de vidanger ladite chambre de pression de frein de service.

On va maintenant poursuivre l'exposé de l'invention par la description d'exemples de réalisation, donnée ci-après à titre illustratif et non limitatif, en référence aux dessins annexés sur lesquels :
- la figure 1 illustrent schématiquement et partiellement un système de freinage ferroviaire conforme à un premier mode de réalisation de l'invention, lequel système est pourvu d'une unité de contrôle et de commande ;
- la figure 2 représente schématiquement l'unité de contrôle et de commande et un réseau de cheminement de conduites du système, qui est connecté à cette unité ;
- les figures 3 à 6 illustrent schématiquement le fonctionnement du système de freinage ferroviaire de la figure 1, respectivement dans différentes configurations ;
- les figures 7 à 9 représentent schématiquement différents éléments systémiques de l'unité de contrôle et de commande, fonctionnant selon différentes configurations ; et
- la figure 10 est une vue similaire à celle de la figure 1, montrant seulement partiellement le système de freinage ferroviaire conformément à un second mode de réalisation.

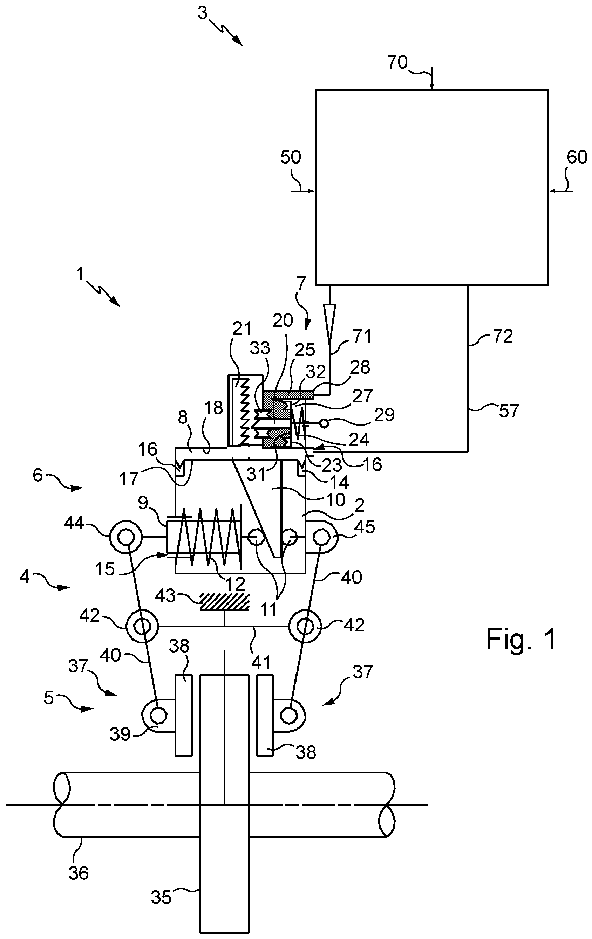

La figure 1 représente schématiquement un système de freinage ferroviaire 1 pour un véhicule ferroviaire à frein à garnitures ou à semelles.

Le système de freinage ferroviaire 1 comporte un corps 2 formant ici un cylindre à la fois de frein de service 6 et de frein de parking 7, une unité de contrôle et de commande 3 configurée pour gérer le fonctionnement du frein de service 6 et du frein de parking 7, un réseau de cheminement de conduites pneumatiques connecté au corps 2 et à l'unité de contrôle et de commande 3, une timonerie de freinage 4 reliée mécaniquement au corps 2 ainsi qu'un frein 5 à garnitures sur lequel la timonerie de freinage 4 est configurée pour agir.

Le corps 2 présente ici la forme d'une enveloppe globalement fermée.

Le frein de service 6 comporte un piston de frein de service 8 mobile par rapport au corps 2 selon une première direction axiale, une tige de poussée 9 mobile également par rapport au corps 2 suivant une deuxième direction axiale perpendiculaire à la première direction axiale.

Le piston de freinage 8 délimite avec le corps 2 une chambre de pression de frein de service 13.

Le piston de freinage 8 présente deux côtés respectivement un premier côté 17 configuré pour agir sur la timonerie de freinage 4 par l'intermédiaire de la tige de poussée 9 et un second côté 18 opposé au premier côté 17 et tourné vers la chambre de pression de frein de service 13.

Le frein de service 6 comporte en outre une tige crantée 21 fixée sur le deuxième côté 18 du piston de freinage 8. Cette tige crantée 21 s'étend longitudinalement selon la première direction axiale.

Le piston de freinage 8 est configuré pour se déplacer dans le corps 2 tout en maintenant la chambre de pression de frein de service 13 relativement étanche grâce à une membrane 14 disposée entre ce piston de freinage 8 et des bords intérieurs du corps 2.

Le frein de service 6 comporte en outre une pièce de coin 10 fixée sur le premier côté 17 du piston de freinage 8.

Cette pièce de coin 10 présente une section triangulaire et est configurée pour coopérer avec un jeu de butées à roulements 11, dont l'une des butées à roulements est reliée au corps 2 tandis que l'autre des butées à roulements est reliée à la tige de poussée 9.

Cette tige de poussé 9 est pourvue d'un régleur d'usure configuré pour compenser l'usure des garnitures du frein 5 afin d'éviter qu'un jeu trop important (consécutif à l'usure des garnitures) ne réduise l'effort de freinage.

Le frein de service 6 comporte en outre un ressort 12 ici disposé autour de la tige de poussée 9, entre la butée à roulements qui est reliée à cette dernière et le bord intérieur du corps 2. Ce ressort 12 est configuré pour rappeler la butée qui est reliée à la tige de poussée 9 contre la pièce de coin 10.

Le frein de service 6 comporte en outre un premier orifice 15 ménagé dans le corps 2 et configuré pour autoriser le déplacement de la tige de poussée 9 au travers de ce premier orifice 15.

Le frein de service 6 comporte en outre un deuxième orifice 16 ménagé dans le corps 2 et débouchant dans la chambre de pression de frein de service 13.

La chambre de pression de frein de service 13 est ici raccordée par une première conduite d'alimentation 72 du réseau de cheminement de conduites pneumatiques, appelée aussi conduite de frein de service et de frein d'urgence, connectée au niveau de ce deuxième orifice 16, à une source de fluide sous pression tel que, par exemple, un circuit pneumatique.

Le corps 2 comporte une cavité 27 accolée à la chambre de pression de frein de service 13 et dans laquelle est disposé le frein de parking 7.

Le frein de parking 7 comporte un dispositif de blocage formé ici par un doigt de blocage 20 mobile par rapport au corps 2 et s'étendant suivant la deuxième direction axiale.

Le frein de parking 7 comporte en outre ici un piston de maintien 23 mobile par rapport au corps 2 et délimite avec ce dernier une chambre de pression de frein de parking 25.

Ce piston de maintien 23 présente deux côtés, respectivement un premier côté 31 sur lequel est attaché le doigt de blocage 20 et un second côté 32 opposé au premier côté 31 et tourné vers la chambre de pression de frein de parking 25.

Le frein de parking 7 comporte en outre ici un élément ressort 24 disposé entre le corps 2 et le deuxième côté 32 du piston de maintien 23. Cet élément ressort 24 est configuré pour agir sur ce piston de maintien 23 et par conséquent sur le doigt de blocage 20.

On notera que le piston de maintien 23 et que l'élément ressort 24 forment ici un dispositif de commande mobile du frein de parking 7.

Le piston de maintien 23 est configuré pour se déplacer dans le corps 2 tout en maintenant la chambre de pression de frein de parking 25 relativement étanche grâce à une membrane (non représentée) disposée entre ce piston de maintien 23 et des bords intérieurs du corps 2.

Le frein de parking 7 comporte un troisième orifice (non représenté) ménagé dans le corps 2 et débouchant à la fois dans la chambre de pression de frein de parking 25 et dans la chambre de pression de frein de service 13, lequel troisième orifice est configuré pour autoriser le déplacement du doigt de blocage 20 à travers ce troisième orifice.

On notera que l'étanchéité relative entre la chambre de pression de frein de parking 25 et la chambre de pression de frein de service 13 est assurée par la présence d'un joint d'étanchéité 33 disposé à l'interface entre ce troisième orifice et le doigt de blocage 20.

Le frein de parking 7 comporte en outre un quatrième orifice 28 ménagé dans le corps 2 et débouchant dans la chambre de pression de frein de parking 25.

Cette chambre de pression de frein de parking 25 est ici raccordée par une deuxième conduite d'alimentation 71 du réseau de cheminement de conduites pneumatiques, appelée aussi conduite de frein de parking, connectée au niveau de ce quatrième orifice 28, à une source de fluide sous pression, tel que par exemple un circuit pneumatique.

Le frein de parking 7 comporte en outre une pièce de déverrouillage 29 rattachée sur le deuxième côté 32 du piston de maintien 23 et débouchant à l'extérieur du corps 2 au travers d'un cinquième orifice (non représenté) ménagé dans ce corps 2 et débouchant dans la cavité 27 ; de sorte que cette pièce de déverrouillage 29 est accessible pour être manipulée depuis l'extérieur du corps 2 le cas échéant.

Le frein de service 6 est disposé dans le corps 2 et est configuré pour agir sur le frein 5 par l'intermédiaire de la timonerie de freinage 4.

Ce frein 5 comporte un disque de frein 35 (ici vu de dessus) monté par exemple sur un essieu 36 de véhicule ferroviaire, ou directement sur la roue à freiner.

Ce frein 5 comporte en outre deux patins 37 pourvus chacun d'une garniture 38 configurées pour être appliquée au contact du disque 35 pour réduire sa vitesse de rotation et par conséquent celle de la roue à freiner, ainsi que d'un oeillet de fixation 39 ménagé à l'opposé de la surface de la garniture 38 configurée pour venir s'appliquer sur le disque de frein 35.

La timonerie de freinage 4 comporte deux ou quatre leviers déformables 40 pourvus chacun d'une portion supérieure et d'une portion inférieure qui sont solidaires. Seulement deux leviers sont ici illustrés et, dans le cas où la timonerie présente quatre leviers, ils peuvent être solidaires deux à deux ou en variante indépendant les uns des autres.

Chaque portion des leviers 40 est articulée sur un connecteur central 41 par l'intermédiaire de deux pivots 42.

La portion inférieure de chaque levier déformable 40 est reliée à l'un des patins 37 par l'intermédiaire de son oeillet de fixation 39.

La portion supérieure de chaque levier déformable 40 est quant à elle reliée à une articulation respective 44, 45.

La timonerie de freinage 4 reçoit le corps 2 entre les portions supérieures des leviers déformables 40, au niveau des articulations 44 et 45.

Le corps 2 est monté à rotation sur l'articulation 44 qui est solidaire d'une extrémité de la tige de poussée 9 tandis qu'il est monté fixe sur l'articulation 45, laquelle est directement solidaire de ce corps 2.

La timonerie de freinage 4 comporte également une patte de fixation 43 solidaire du connecteur central 41 pour le montage de cette timonerie de freinage 4 sur le véhicule ferroviaire ; afin que les patins de freinage 37 soient situés de part et d'autre du disque de frein 35 (ou de la roue du véhicule ferroviaire).

On notera que le rapprochement des articulations 44 et 45 permet d'écarter les patins 37 l'un de l'autre et qu'à l'inverse, l'éloignement de ces articulations 44 et 45 permet de serrer les patins 37 sur le disque de frein 35 (ou sur la roue du véhicule ferroviaire).

Le réseau de cheminement de conduites pneumatiques comporte ici un circuit pneumatique principal formé de conduites principale et générale 70 configurées pour cheminer chacune le long du véhicule ferroviaire.

Les conduite générale et principale 70 sont distinctes, ne sont pas raccordées ensemble et s'étendent généralement en parallèle. La conduite générale permet d'assurer la continuité pneumatique le long du train et autorise le freinage de service du train, en utilisant directement le fluide cheminant dans la conduite générale. La conduite principale permet quant à elle d'alimenter des équipements notamment du système de freinage ferroviaire, par exemple des réservoirs (voir ci-après plus en détail).

Ce réseau comporte en outre un circuit pneumatique d'alimentation des chambres de frein de service et de parking, respectivement 13 et 25, formé notamment par les première et deuxième conduites d'alimentation 72 et 71.

L'unité de contrôle et de commande 3 est connectée à la chambre de pression de frein de service 13 par l'intermédiaire de la première conduite d'alimentation 72 à laquelle elle est raccordée.

L'unité de contrôle et de commande 3 est ici également connectée à la chambre de pression de frein de parking 25 par l'intermédiaire de la seconde conduite d'alimentation 71 à laquelle elle est raccordée.

L'unité de contrôle et de commande 3 comporte des éléments systémiques (non représentés) qui sont configurés pour recevoir et traiter des informations représentatives relatives à des consignes de fonctionnement du véhicule ferroviaire, par un premier canal du type électrique et/ou pneumatique et/ou encore manuel, noté 50 sur la figure 1.

Ces éléments systémiques peuvent par exemple être formés par des relais pneumatiques et/ou des relais électriques et/ou des cartes électroniques et/ou des unités centrales de traitement ou microprocesseurs, et/ou des composants de mémoire vive comportant des registres adaptés à enregistrer des variables des paramètres créés et modifiés au cours de l'exécution de programmes, et/ou des interfaces de communication configurées pour transmettre et recevoir des données, et/ou des éléments de stockage interne, tels que des disques durs, pouvant notamment comporter le code exécutable de programmes permettant la gestion des freins de service et parking 6 et 7.

Ces éléments systémiques sont en outre configurés pour recevoir et traiter des informations représentatives relatives à des paramètres d'utilisation du véhicule ferroviaire, par un second canal du type électrique et/ou pneumatique et/ou encore manuel, noté 60 sur la figure 1.

On notera que sur le figure 1, l'unité de contrôle et de commande 3 est associée à une timonerie de freinage et à un seul frein 5 du véhicule ferroviaire. En variante, une telle unité de contrôle et de commande peut être associée à un essieu (non illustré) du véhicule ferroviaire, pourvu d'une pluralité de freins 5, ou à un bogie (non illustré) du véhicule ferroviaire, pourvu de deux essieux, ou encore à une voiture (non illustrée) du véhicule ferroviaire, pourvue de deux bogies, ou le véhicule ferroviaire peut ne comporte qu'une telle unité de contrôle et de commande.

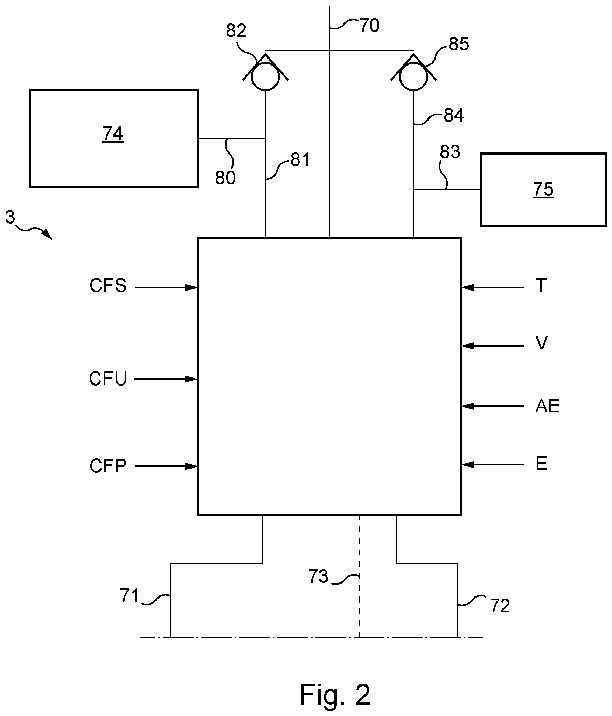

La figure 2 représente schématiquement de manière plus détaillée à la fois le réseau de cheminement de conduites pneumatiques et les premier et second canaux par lesquels transitent les informations représentatives reçues par l'unité de contrôle et de commande 3.

Le circuit principal du réseau comporte un premier point de dérivation vers une première conduite auxiliaire 81 connectée, à une extrémité, à la conduite générale des conduites 70 et à une extrémité opposée, à l'unité de contrôle et de commande 3.

Le réseau est pourvu d'un premier réservoir auxiliaire 74 connecté à la première conduite auxiliaire 81 par l'intermédiaire d'une première conduite de raccordement 80.

Ce premier réservoir auxiliaire 74 est alimenté par la conduite principale des conduites 70 et le réseau est en outre pourvu d'une première valve anti-retour 82 monté sur la première conduite auxiliaire 81, entre la conduite principale et le premier réservoir auxiliaire 74.

La conduite principale est configurée pour acheminer un fluide sous une pression prédéterminée. Le réservoir auxiliaire 74 comporte donc un fluide à une telle première pression prédéterminée.

Un tel premier réservoir auxiliaire 74 peut par exemple être présent sur chaque bogie du véhicule ferroviaire.

Le circuit principal du réseau comporte en outre un second point de dérivation vers une seconde conduite auxiliaire 84 connectée, à une extrémité, à la conduite principale et à une extrémité opposée, à l'unité de contrôle et de commande 3.

Le réseau est pourvu d'un second réservoir auxiliaire 75 connecté à la seconde conduite auxiliaire 84 par l'intermédiaire d'une seconde conduite de raccordement 83.

Ce second réservoir auxiliaire 75 est alimenté par la conduite principale et le réseau est en outre pourvu d'une seconde valve anti-retour 85 monté sur la seconde conduite auxiliaire 84, entre la conduite principale et le second réservoir auxiliaire 75.

La conduite principale est configurée pour acheminer un fluide sous une pression prédéterminée. Le réservoir auxiliaire 74 comporte donc un fluide à une telle première pression prédéterminée.

Un tel second réservoir auxiliaire 75 peut par exemple être présent sur chaque bogie du véhicule ferroviaire.

On notera que la conduite principale et la conduite générale, les première et seconde conduites auxiliaires 81 et 84 et les premier et second réservoirs auxiliaires 74 et 75 sont ici situés schématiquement en amont de l'unité de contrôle et de commande 3 et sont connectés en entrée de cette unité de contrôle et de commande 3.

Au contraire, les première et deuxième conduites d'alimentation 71 et 72 sont situées schématiquement en aval de l'unité de contrôle et de commande 3 et sont connectées en sortie de cette unité de contrôle et de commande 3.

Le réseau comporte en outre une troisième conduite d'alimentation 73, appelée aussi conduite intermédiaire dédiée, située schématiquement en aval de l'unité de contrôle et de commande 3 et connectée également en sortie de cette unité de contrôle et de commande 3.

Cette troisième conduite d'alimentation 73 est en outre connectée au niveau du deuxième orifice 16 de la chambre de frein de service 13, de la même manière que la première conduite d'alimentation 72.

La troisième conduite d'alimentation 73 est configurée pour acheminer un fluide issu d'une source d'agent de pression pneumatique uniquement lorsque le frein de parking 6 est dans une configuration de travail (voir ci-après), c'est-à-dire en shuntant la conduite de frein de service 72.

Parmi les consignes de fonctionnement du véhicule ferroviaire, l'unité de contrôle et de commande 3 est configurée pour recevoir et traiter au moins une information représentative d'une consigne de frein de service, notée CFS, au moins une information représentative d'une consigne de frein de parking, notée CFP, et au une information représentative d'une consigne de frein d'urgence, notée CFU.

Comme mentionné plus haut, ces consignes peuvent correspondre à un ou plusieurs signaux électriques et/ou pneumatiques et/ou mécaniques.

Parmi les paramètres d'utilisation du véhicule ferroviaire, l'unité de contrôle et de commande 3 est configurée pour recevoir au moins une information représentative de la traction du véhicule, et/ou au moins une information représentative de la vitesse du véhicule, et/ou au moins une information représentative de la charge du véhicule, et/ou au moins une information représentative de l'anti-enrayage (ou de l'enrayage) du véhicule, et/ou au moins une information représentative des valeurs de pression dans les conduites pneumatiques du véhicule, en particulier la conduite principale, la conduite générale, les conduites auxiliaires 81 et 84 et les conduites d'alimentation 71, 72 et 73, et/ou au moins une information représentative d'une énergie électrique du véhicule.

Concernant la charge du véhicule, l'information reçue peut concerner par exemple un wagon seulement, ou bien plusieurs wagons successifs ou l'intégralité du véhicule ferroviaire. Cela dépend du nombre de systèmes de freinage conforme à l'invention et de la stratégie de commande de freinage.

On notera d'ailleurs que certains paramètres de fonctionnement de certains véhicules ferroviaires peuvent naturellement (ou initialement) être asservis à la charge du véhicule par exemple pour gérer le frein de service tandis que d'autres ne sont pas asservis à la charge du véhicule.

L'unité de contrôle et de commande 3 est ici configurée pour recevoir la consigne de frein de service CFS et au moins une information représentative d'au moins un des paramètres susmentionnés d'utilisation du véhicule ferroviaire.

Comme indiqué plus haut, il peut s'agir d'une consigne de frein de service CFS ou d'une consigne de frein d'urgence CFU.

L'unité de contrôle et de commande 3 est en outre configurée pour recevoir une valeur d'une première source d'agent de pression pneumatique configurée pour alimenter la chambre de pression de frein de service 13 lorsque la consigne de frein de service CFS est non nulle.

L'unité de contrôle et de commande est en outre configurée pour recevoir la consigne de frein de parking CFP, ou pour déterminer cette consigne de frein de parking CFP en fonction du ou des paramètres d'utilisation du véhicule ferroviaire.

L'unité de contrôle et de commande 3 est en outre configurée pour déterminer une valeur d'une troisième source d'agent de pression pneumatique configurée pour alimenter, via la conduite de frein de parking 71, la chambre de pression de frein de parking 25 lorsque la consigne de frein de parking CFP est non nulle.

Cette valeur de la troisième source d'agent de pression pneumatique est déterminée en fonction de la consigne de frein de parking CFP. Par exemple, cette valeur est nulle lorsque la consigne de frein de parking CFP est non nulle et que le frein de parking 6 doit être appliqué.

L'unité de contrôle et de commande 3 est en outre configurée pour déterminer une valeur d'une deuxième source d'agent de pression pneumatique configurée pour alimenter, via la conduite de frein de service 72 ou via la conduite intermédiaire dédiée 73, la chambre de pression de frein de service 13 lorsque la consigne de frein de parking CFP est non nulle.

Cette valeur de la deuxième source d'agent de pression pneumatique est déterminée en fonction de la consigne de frein de parking CFP, et/ou de la valeur de la première source d'agent de pression pneumatique, et/ou de la consigne de frein de service CFS, et/ou du ou des paramètres d'utilisation du véhicule ferroviaire.

L'unité de contrôle et de commande 3 peut être configurée pour déterminer une valeur corrigée de la première source d'agent de pression pneumatique, en fonction de la consigne de frein de parking CFP, et/ou de la valeur de la première source d'agent de pression pneumatique, et/ou de la consigne de frein de service CFS, et/ou du ou des paramètres d'utilisation du véhicule ferroviaire et, le cas échéant, la valeur déterminée de la deuxième source d'agent de pression pneumatique est égale à cette valeur corrigée.

La valeur de la deuxième source d'agent de pression pneumatique peut être déterminée de sorte à être constante, ou en variante, variable en fonction de la valeur de la première source d'agent de pression pneumatique.

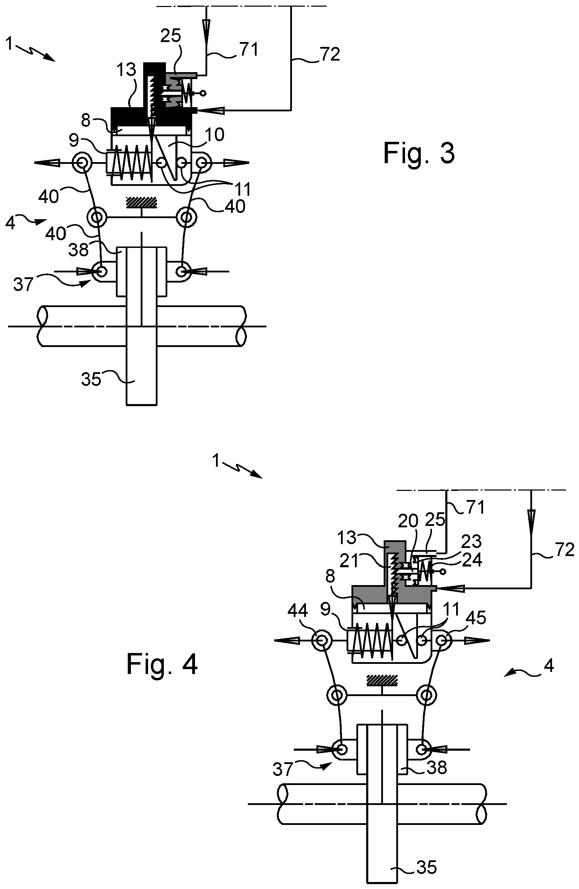

On va maintenant décrire le fonctionnement du système de freinage ferroviaire 1 en référence à la figure 1 et aux figures 3 à 6, qui illustrent schématiquement différentes configurations de ce système 1.

Sur la figure 1, le système de freinage ferroviaire 1 est dans une configuration de réarmement. La consigne de frein de service CFS, la consigne de frein d'urgence et la consigne de frein de parking sont ici nulles.

Dans cette configuration de réarmement, la chambre de pression de frein de service 13 n'est pas alimentée (elle est vidangée) de sorte que le piston de freinage 8 est dans une position de repos, dans laquelle il n'applique pas d'effort de freinage sur la tige de poussée 9.

Par conséquent, les articulations 44 et 45 de la timonerie de freinage 4 sont à une distance l'une de l'autre qui permet de maintenir à distance les patins 37 du disque de frein 35.

La chambre de pression de frein de parking 25 est quant à elle alimentée par la conduite de frein de parking 71, dans laquelle chemine une troisième source d'agent de pression pneumatique.

Cette troisième source d'agent de pression pneumatique peut être issue directement de la conduite générale, ou du premier réservoir auxiliaire 74 ou encore du second réservoir auxiliaire 75.

La chambre de pression de frein de parking 25 est donc sous pression de sorte que le piston de maintien 23 se trouve dans une première position dans laquelle l'élément ressort 24 est comprimé et le doigt de blocage 20 dans une première position à distance de la tige crantée 21 du frein de service 6.

Dans cette configuration de réarmement du système 1, le frein de parking 7 est dans une configuration réarmée tandis que le frein de service 6 est dans une configuration de repos.

On notera que le frein de parking 7 est de préférence dimensionné et configuré de sorte que la pression de réarmement du frein de parking 7 est relativement faible, par exemple de l'ordre de 2bar à 6bars.

Sur la figure 3, le système de freinage ferroviaire 1 est représenté dans une configuration d'application du frein de service 6. La consigne de frein de service CFS est donc non nulle.

Dans cette configuration d'application du frein de service 6, la chambre de pression de frein de service 13 est alimentée par la conduite de frein de service 72, dans laquelle chemine une première source d'agent de pression pneumatique.

Cette première source d'agent de pression pneumatique peut être issue, directement ou indirectement, de la conduite générale, ou du premier réservoir auxiliaire 74 ou encore du second réservoir auxiliaire 75.

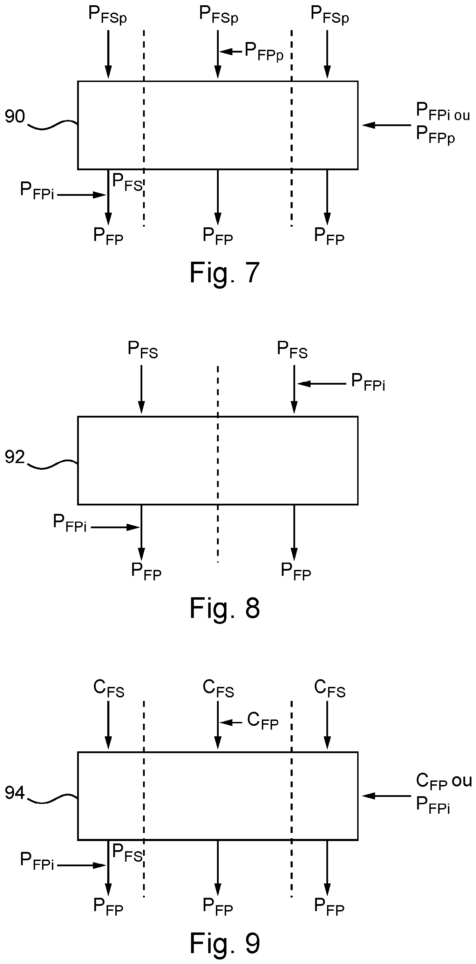

Comme on le verra ci-après en référence à la figure 9, cette première source d'agent de pression pneumatique peut être générée par un dispositif de génération de pression pneumatique, à partir d'une pression pilote.

La chambre de pression de frein de service 13 est donc sous pression et le piston de freinage 8 a été déplacé dans la première direction axiale de sa première position vers une deuxième position dans laquelle la pièce de coin 10 a écarté le jeu de butées à roulements 11, déplaçant ainsi la tige de poussée 9 et l'articulation 44.

Par conséquent, les articulations 44 et 45 s'éloignent l'une de l'autre et provoquent le rapprochement des patins 37 et donc l'application des garnitures 38 contre le disque de frein 35.

On notera que dans la configuration d'application du frein de service 6 du système 1, les leviers 40 sont déformés (élastiquement).

On notera également que dans cette configuration illustrée sur la figure 3, la chambre de pression de frein de parking 25 est toujours sous pression comme mentionné en référence à la figure 1.

Dans cette configuration d'application du frein de service 6 du système 1, le frein de parking 7 est toujours dans sa configuration réarmée tandis que le frein de service 6 est dans une configuration de travail.

On notera également que dans la configuration illustrée sur la figure 3, la valeur de pression déterminée du fluide injecté dans la chambre de pression de frein de service 13 déplace le piston de freinage 8 d'une course prédéterminée afin d'agir sur la timonerie de freinage 4 avec une première force déterminée et par conséquent appliquer un premier effort déterminé sur le disque de frein 35.

Sur la figure 4, le système de freinage ferroviaire 2 est représenté dans une configuration de verrouillage dans laquelle le piston de freinage 8 du frein de service 6 est immobilisé dans sa deuxième position illustrée sur la figure 3.

On notera que la timonerie de freinage 4 est ici dans la même position que celle illustrée sur la figure 3.

La chambre de pression de frein de service 13 est quant à elle toujours sous pression tandis que la chambre de pression de parking 25 est vidangée. Les consignes de frein de service CFS et de frein de parking CFP sont donc non nulles.

La vidange de la chambre de pression de parking 25 libère l'élément ressort 24, qui déplace le piston de maintien 23 de sa première position vers une deuxième position dite position de verrouillage et ainsi déplace le doigt de blocage 20 de sa première position à une deuxième position dans laquelle il vient immobiliser la tige crantée 21 par engrainement de l'extrémité distale de ce doigt de blocage 20 avec des crans ménagés sur la tige crantée 21.

Sur cette même figure 4, le système de freinage ferroviaire 2 est également illustré dans une configuration dite de suralimentation de frein de service 6.

Le fluide acheminé par la conduite de frein de service 72 peut être issu de la deuxième source d'agent de pression pneumatique et présenter une valeur de pression supérieure à la valeur de pression de la première source.

La suralimentation de cette chambre de pression de frein de service 13 par le fluide permet de déplacer le piston de freinage 8 pour écarter encore le jeu de butée à roulements 11 et ainsi éloigner encore les articulations 44 et 45 de la timonerie de freinage 4.

En variante, la suralimentation de la chambre de pression de frein de service 13 peut se faire par l'intermédiaire de la conduite intermédiaire dédiée 73 dans laquelle chemine la deuxième source d'agent de pression pneumatique.

Cet éloignement représentatif d'une deuxième force déterminée supérieure à la première force déterminée appliquée par le piston de freinage 8 engendre un deuxième effort déterminé supérieur au premier effort déterminé sur le disque de frein 35 par l'intermédiaire des patins 37.

On notera que la tige crantée 21 et le doigt de blocage 20 sont configurés pour autoriser un tel déplacement du piston de freinage 8 alors que le doigt de blocage 20 immobilise cette tige crantée 21.

Par exemple, la tige crantée 21 présente une denture prédéterminée et l'extrémité distale du doigt de blocage 20 présente également une denture prédéterminée complémentaire de la denture prédéterminée de la tige crantée 21.

On notera que le doigt de blocage 20 autorise le déplacement de la tige crantée 21 uniquement dans un sens de déplacement du piston de freinage 8 pour serrer encore plus le disque de frein 35 et immobilise à nouveau la tige crantée 21 dès que cette dernière est stoppée, dans la troisième position du piston de freinage 8.

En variante encore, le fluide acheminé par la conduite de frein de service 72 peut être issu de la deuxième source d'agent de pression pneumatique et présenter une valeur de pression sensiblement égale ou inférieure à la valeur de pression de la première source ; et le cas échéant, il ne s'agit pas d'une suralimentation au sens décrit ci-dessus mais d'une alimentation de la chambre de pression de frein de service 13 qui permet d'assurer un effort de frein de parking déterminé.

Plus généralement, la valeur de pression de la deuxième source est donc déterminée, par rapport à la valeur de pression de la première source, pour appliquer un effort de frein de parking lui aussi déterminé.

Dans ces configurations de verrouillage et de suralimentation du frein de service 6, le frein de parking 7 et le frein de service 6 sont chacun dans une configuration de travail.

Dans une variante de réalisation, l'unité de contrôle et de commande 3 peut recevoir une consigne de frein de parking CFP non nulle tout en ayant préalablement reçue une consigne de frein de service CFS nulle.

Le cas échéant, le piston de freinage 8 du frein de service 6 est d'abord immobilisé dans sa première position illustrée sur la figure 1 puis la conduite de frein de service 72 et/ou la conduite intermédiaire dédiée 73 achemine un fluide issu de la deuxième source d'agent de pression pneumatique, en shuntant la conduite de frein de service 72.

Plus généralement, l'ordre dans lequel les opérations de verrouillage par l'application du frein de parking 7 et d'alimentation et/ou suralimentation du frein de service 6 sont réalisées est indifférent ; et ces opérations peuvent également effectuées en même temps.

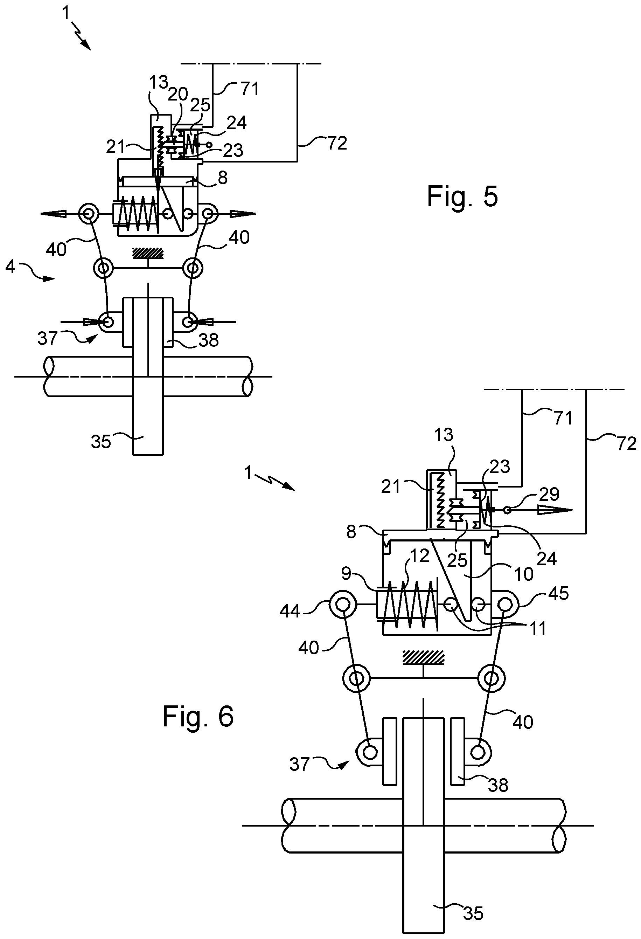

Sur la figure 5, le système de freinage ferroviaire 2 est représenté dans une configuration de vidange du frein de service 6. La consigne de frein de service CFS est nulle tandis que la consigne de frein de parking CFP est non nulle.

La vidange de la chambre de pression de frein de service 13 peut s'effectuer par l'intermédiaire des fuites dans le réseau 3. Autrement dit, ni la chambre de pression de service 13, ni la conduite de frein de service 72 ne sont directement mises à l'atmosphère.

On notera que le fluide sous pression présent dans la chambre de pression de frein de service 13 s'échappe de cette dernière notamment depuis la conduite de frein de service 72.

On notera également que, grâce au frein de parking 6 et en particulier à l'ensemble formé du doigt de blocage 20, du piston de maintien 23 et de l'élément ressort 24, en combinaison avec la tige crantée 21 fixée au piston de freinage 8 du frein de service 6, ce piston de freinage 8 reste dans sa troisième position où il agit sur la timonerie de freinage 4 pour appliquer le deuxième effort prédéterminé sur le disque de frein 35 par l'intermédiaire des patins 37, malgré la vidange de la chambre de pression de frein de service 13.

Dans cette configuration de vidange du frein de service 6, le frein de parking 7 est dans une configuration de travail tandis que le frein de service 6 est bloqué dans sa configuration de travail, malgré la vidange de la chambre de pression de frein de service 13.

Sur la figure 6, le système de freinage ferroviaire 1 est représenté dans une configuration de déverrouillage. Les consignes de frein de service CFS et de frein de parking CFP sont donc nulles.

Dans cette configuration de déverrouillage, un effort a été appliqué sur la pièce de déverrouillage 29 du frein de parking 6 de sorte à tirer cette pièce déverrouillage 29 vers l'extérieur du corps 2.

Le déplacement de cette pièce de déverrouillage 29 entraine le piston de maintien 23 et par conséquent le doigt de blocage 20 à l'encontre de l'élément ressort 24 qui se trouve ainsi comprimé.

Le fait que le doigt de blocage 20 atteigne sa deuxième position, ce dernier ne coopère plus avec la tige crantée 21, qui est ainsi libre.

Par conséquent, le ressort 12 disposé autour de la tige de poussée 9 et entre le bord intérieur du corps 2 et la butée à roulements fixée sur la tige de poussée 9 retrouve sa position initiale.

Ce ressort 12 entraine donc la butée à roulements 11 disposée entre la tige de poussée 9 et la pièce de coin 10 selon la deuxième direction axiale, entrainant ainsi le retour du piston de freinage 8 selon la première direction axiale, jusqu'à sa position de repos.

Les articulations 44 et 45 de la timonerie de freinage sont rapprochées l'une de l'autre de sorte que les leviers déformables 40 retrouvent leurs positions initiales illustrées sur la figure 1 et les patins 37 se retrouvent à distance du disque de frein 35, lequel est ainsi libre en rotation (le disque de frein 35 n'est plus freiné).

Dans cette configuration de déverrouillage, le frein de parking 7 est dans une configuration de déverrouillage tandis que le frein de service 6 est dans une configuration de repos.

On notera que le frein de parking 6 est configuré de sorte que l'effort à appliquer pour le déverrouillage, par l'intermédiaire de la pièce de déverrouillage 29, soit relativement faible pour être effectué manuellement par un utilisateur tel que le conducteur du véhicule ferroviaire. Par exemple cet effort est de l'ordre d'environ 5 à 50 daN.

Sur la figure 7, l'unité de contrôle et de commande 3 comporte un dispositif de relayage 90 configuré pour générer une pression d'utilisation du fluide à partir d'une valeur pilote de pression.

Selon un mode de réalisation (à gauche sur la figure 7), le dispositif de relayage 90 est ici configuré pour recevoir, en entrée, une valeur pilote de la première source d'agent de pression pneumatique PFSp.

Le dispositif de relayage 90 est en outre configuré pour générer et fournir, en sortie, la valeur déterminée de la première source d'agent de pression pneumatique PFS.

Le cas échéant, l'unité de contrôle et de commande 3 est configurée pour recevoir, en aval du dispositif de relayage 90, une valeur intermédiaire de la deuxième source d'agent de pression pneumatique PFPi qui se substitue ou se combine à la valeur de la première source d'agent de pression pneumatique PFS pour générer la valeur déterminée de la deuxième source d'agent de pression pneumatique PFP.

Selon un autre mode de réalisation (au centre sur la figure 7), le dispositif de relayage 90 est configuré pour recevoir, en entrée, une valeur pilote de la première source d'agent de pression pneumatique PFSp et une valeur pilote de la deuxième source d'agent de pression pneumatique PFPp qui se substitue ou se combine à la valeur pilote de ladite première source d'agent de pression pneumatique PFSp.

Le dispositif de relayage 90 est en outre configuré pour générer et fournir, en sortie, la valeur déterminée de la deuxième source d'agent de pression pneumatique PFP.

Selon encore un autre mode de réalisation (à droite sur la figure 7), le dispositif de relayage 90 est configuré recevoir, en entrée, une valeur pilote de la première source d'agent de pression pneumatique PFSp.

Le dispositif de relayage 90 est en outre configuré pour recevoir, dans le dispositif de relayage 90, une valeur intermédiaire ou une valeur pilote de la deuxième source d'agent de pression pneumatique, respectivement PFPi ou PFPp.

Le dispositif de relayage 90 est en outre configuré pour générer et fournir, en sortie, la valeur déterminée de la deuxième source d'agent de pression pneumatique PFP.

On notera que le dispositif de relayage 90 peut par exemple comporter des clapets navette, pilotés ou non, et/ou des électrovalves, et/ou des actionneurs.

Sur la figure 8, l'unité de contrôle et de commande 3 comporte un dispositif anti-enrayage 92 configuré pour assurer l'efficacité du freinage du véhicule ferroviaire.

Dans un mode de réalisation (à gauche sur la figure 8), l'unité de contrôle et de commande 3 est configurée pour générer la valeur déterminée de la deuxième source d'agent de pression pneumatique PFP à partir notamment de la valeur de la première source d'agent de pression pneumatique PFS et d'une valeur intermédiaire de la deuxième source d'agent de pression pneumatique PFPi qui se substitue ou se combine à la valeur de la première source d'agent de pression pneumatique PFS, en aval du dispositif anti-enrayage 92.

Dans un autre mode de réalisation (à droite sur la figure 8), l'unité de contrôle et de commande 3 est configurée pour générer la valeur déterminée de la deuxième source d'agent de pression pneumatique PFP à partir notamment de la valeur de la première source d'agent de pression pneumatique PFS et d'une valeur intermédiaire de la deuxième source d'agent de pression pneumatique PFPi qui se substitue ou se combine à la valeur de la première source d'agent de pression pneumatique PFS, en amont du dispositif anti-enrayage 92.

On notera que le dispositif de anti-enrayage 92 peut par exemple comporter des clapets navette, pilotés ou non, et/ou des électrovalves, et/ou des actionneurs.

Sur la figure 9, l'unité de contrôle et de commande 3 comporte un dispositif de génération de pression 94 configuré pour générer la valeur de pression de la première source d'agent de pression pneumatique.

Dans un mode de réalisation (à gauche sur la figure 9), ce dispositif de génération 94 est configuré pour recevoir, en entrée, une consigne de frein de service CFS.

Ce dispositif de génération 94 est en outre configuré pour générer et fournir, en sortie, la valeur de la première source d'agent de pression pneumatique PFS.

Le cas échéant, l'unité de contrôle et de commande 3 est configurée pour recevoir, en aval du dispositif de génération 94, une valeur intermédiaire de ladite deuxième source d'agent de pression pneumatique PFPi qui se substitue ou se combine à la valeur de la première source d'agent de pression pneumatique PFS pour générer la valeur déterminée de la deuxième source d'agent de pression pneumatique PFP.

Dans un autre mode de réalisation (au centre sur la figure 9), le dispositif de génération 94 est configuré pour recevoir, en entrée, une consigne de frein de service CFS et une consigne de frein de parking CFP qui se substitue ou se combine à la consigne de frein de service CFS.

Le dispositif de génération 94 est en outre configuré pour générer et fournir, en sortie, la valeur déterminée de la deuxième source d'agent de pression pneumatique PFP.

Dans encore un autre mode de réalisation (à droite sur la figure 9), le dispositif de génération 94 est configuré pour recevoir, en entrée, une consigne de frein de service CFS.

Le dispositif de génération 94 est en outre configuré pour recevoir, dans le dispositif de génération 94, une consigne de frein de parking CFP ou une valeur intermédiaire de la deuxième source d'agent de pression pneumatique PFPi.

Le dispositif de génération 94 est en outre configuré pour générer et fournir, en sortie, la valeur déterminée de la deuxième source d'agent de pression pneumatique PFP.

On notera que le dispositif de génération 94 peut par exemple comporter des électrovalves, et/ou des capteurs, et/ou des distributeurs pneumatiques, et/ou d'autres dispositifs mécaniques.

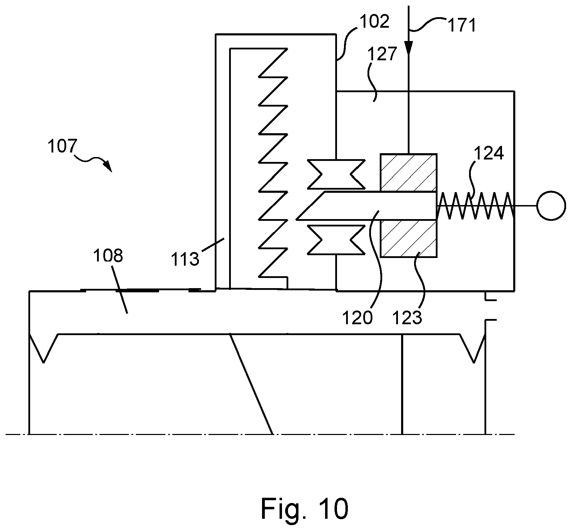

Conformément à un second mode de réalisation du système de freinage ferroviaire illustré sur la figure 10, dans la configuration de verrouillage, l'actionnement du dispositif de blocage peut être effectué par un actionneur électrique plutôt que par la mise sous pression d'une chambre de pression alimentée par exemple via un distributeur.

De manière générale, on a utilisé pour les éléments similaires les mêmes références mais additionnées du nombre 100.

Le frein de parking 107 comporte ici un actionneur électrique 123 mobile par rapport au corps 102, disposé dans la cavité 127, et sur lequel est attaché le doigt de blocage 120 ; ainsi qu'un élément ressort 124 disposé entre le corps 102 et un côté de l'actionneur 123. Cet élément ressort 124 est configuré pour agir sur cet actionneur 123 et par conséquent sur le doigt de blocage 120 qui est mobile dans la chambre de pression de frein de service 113 pour agir sur le piston de freinage 108. L'actionneur électrique 123 et l'élément ressort 124 forment ici un dispositif de commande mobile du frein de parking 107 ; lequel est par conséquent dépourvu d'une chambre de pression de frein de parking.

L'actionneur électrique 123 est ici connecté électriquement à une source d'alimentation électrique par un câble électrique 171 configuré pour être connecté à l'unité de contrôle et de commande.

Le cas échéant, l'unité de contrôle et de commande est configurée pour déterminer une valeur d'une énergie électrique en fonction de la consigne de frein de parking, en vue d'actionner l'actionneur électrique 123 mobile au moins dans sa position de verrouillage, pour le déplacement du doigt de blocage 120.

Dans une variante non illustrée, l'unité de contrôle et de commande peut être configurée pour déterminer un paramètre de charge fictive, constante ou variable, en fonction de la consigne de frein de parking et/ou de la valeur déterminée de la deuxième source d'agent de pression pneumatique, et de substituer le paramètre de charge reçu par le paramètre de charge fictive déterminé.

Cette substitution du paramètre de charge par un paramètre de charge fictive déterminé nécessite qu'au moins certains des paramètres du véhicule, notamment sa consigne de frein de service, soient initialement asservis à la charge ; et permet par exemple de rendre ces paramètres naturellement asservis à la charge non asservi à la charge.

Dans une autre variante non illustrée, les deuxième et troisième sources d'agent de pression pneumatique sont confondues ou, en d'autres termes, la chambre de pression de frein de parking est alimentée par la deuxième source d'agent de pression pneumatique.

Dans d'autres variantes non illustrées :
- dans la configuration de réarmement du système de freinage ferroviaire, l'opération de réarmer est effectuée de manière électrique ou mécanique ou encore hydraulique plutôt que pneumatique ;
- dans la configuration de déverrouillage du système de freinage ferroviaire, la pièce de déverrouillage est maintenue dans une position de déverrouillage du frein de parking par un verrou pneumatique ou électrique ou encore mécanique ;
- dans la configuration de déverrouillage du système de freinage ferroviaire, la commande de déverrouillage est effectuée de manière manuelle par l'utilisation d'au moins un câble, ou de manière pneumatique ou électrique ou encore hydraulique ;
- la configuration de déverrouillage du système de freinage ferroviaire est obtenue en alimentant la chambre de pression de frein de parking, comme pour la configuration de réarmement plutôt que par l'actionnement d'une pièce de déverrouillage ;
- la chambre de pression de frein de service peut être vidangée volontairement plutôt que par les fuites du système, en particulier avant, voire après, l'actionnement de la pièce de déverrouillage du frein de parking, pour mettre le système dans sa configuration de déverrouillage ;
- le système de freinage ferroviaire est dépourvu du premier réservoir auxiliaire et/ou du second réservoir auxiliaire ;
- l'unité de contrôle et de commande peut être configurée pour moduler la valeur de la première source d'agent de pression pneumatique en fonction du paramètre de charge ;
- l'unité de contrôle et de commande peut être configurée pour recevoir et corriger la ou les consignes de frein de service et/ou d'urgence et/ou de parking en fonction du paramètre de charge, et pour moduler les valeurs pilotes de pressions de la première source d'agent de pression pneumatique en fonction de la ou des consignes corrigées ;
- le système de freinage ferroviaire peut comporter un frein de service dépourvu de pièce de coin attachée au piston de freinage, de sorte que ce piston agit directement sur la tige de poussée, lequel agit sur les leviers déformables ; et dans ce cas, le piston de freinage ensemble avec sa tige crantée et la tige de poussée sont mobiles dans la deuxième direction axiale tandis que le frein de parking est configuré de sorte que le doigt de blocage et le piston de maintien sont mobiles dans la première direction axiale ;
- le système de freinage ferroviaire présente une timonerie de freinage différente de celle illustrée sur les figures, en particulier, la timonerie de freinage comporte une semelle configurée pour agir directement sur une roue du véhicule ferroviaire, cette semelle étant directement articulée par une articulation du type pivot fixée à la tige de poussée, un levier rigide fixé au corps du système ainsi qu'un levier déformable fixé à la fois au levier rigide et à l'articulation sur la semelle ; et/ou
- le système de freinage ferroviaire comporte une timonerie de freinage configurée pour agir sur un frein à semelles comme décrit ci-dessus et est pourvu d'un frein de service avec ou sans pièce de coin attachée au piston de freinage.

On rappelle plus généralement que l'invention ne se limite pas aux exemples décrits et représentés.

## Revendications

1. Système de freinage ferroviaire pour véhicule ferroviaire à freins à au moins une garniture ou à au moins une semelle (5), comportant :
- un corps (2 ; 102) ;
- une timonerie de freinage (4) configurée pour agir sur au moins un dit frein à au moins une garniture ou à au moins une semelle (5) ;
- un frein de service (6 ; 106) comportant un piston de freinage (8 ; 108) mobile par rapport audit corps (2 ; 102) pour agir sur ladite timonerie de freinage (4) et délimitant avec ledit corps (2 ; 102) une chambre de pression de frein de service (13 ; 113) configurée pour être alimentée par une première source d'agent de pression pneumatique pour mettre ledit piston de freinage (8 ; 108) dans une position de freinage de service ; et
- un frein de parking (7 ; 107) configuré pour agir sur ledit piston de freinage (8 ; 108) dudit frein de service (6; 106) et admettant une configuration de travail et une configuration de repos ;
ledit système de freinage ferroviaire (1) étant **caractérisé en ce que** ledit frein de parking (7 ; 107) comporte :
- un dispositif de blocage (20 ; 120) mobile par rapport audit corps (2 ; 102) pour agir sur ledit piston de freinage (8 ; 108) et admettant une première position et une seconde position dans laquelle ledit dispositif de blocage (20 ; 120) est configuré pour immobiliser ledit piston de freinage (8 ; 108) en position de freinage de service, ledit frein de parking (7 ; 107) étant alors en configuration de travail ;
- un dispositif de commande (23, 24 ; 123, 124) mobile par rapport audit corps (2 ; 102) et admettant une position de verrouillage dans laquelle ledit dispositif de commande (23, 24 ; 123, 124) est configuré pour maintenir ledit dispositif de blocage (20 ; 120) dans sa seconde position ;
avec ledit système de freinage ferroviaire (1) qui est configuré pour que, lorsque ledit dispositif de commande (23, 24 ; 123, 124) est dans sa position de verrouillage, ladite chambre de pression de frein de service (13 ; 113) est alimentée par une deuxième source d'agent de pression pneumatique, dont la valeur de pression est déterminée, afin d'appliquer, lorsque ledit frein de parking (7 ; 107) est en configuration de travail, un effort de freinage déterminé ;
ledit système de freinage ferroviaire (1) comportant en outre une unité de contrôle et de commande (3) configurée pour :
- recevoir une information représentative d'une valeur de ladite première source d'agent de pression pneumatique ;
- traiter une information représentative d'une consigne de frein de parking au moins dans sa configuration de travail, en vue d'actionner ledit dispositif de commande (23, 24 ; 123, 124) mobile au moins dans sa position de verrouillage ; et
- déterminer une valeur de ladite deuxième source d'agent de pression pneumatique en fonction de ladite consigne de frein de parking et de ladite information représentative d'une valeur de ladite première source d'agent de pression pneumatique, en vue d'alimenter ladite chambre de pression de frein de service (13 ; 113).

2. Système selon la revendication 1, **caractérisé en ce que** ladite information représentative de ladite valeur de ladite première source d'agent de pression pneumatique et ladite information représentative de ladite consigne de frein de parking correspondent chacune à un signal électrique ou pneumatique ou mécanique.

3. Système selon l'une des revendications 1 et 2, **caractérisé en ce que** ledit dispositif de commande (23, 24) délimite avec ledit corps (2) une chambre de pression de frein de parking (25) configurée pour être alimentée par une troisième source d'agent de pression pneumatique, ladite unité de contrôle et de commande (3) étant en outre configurée pour déterminer une valeur de ladite troisième source d'agent de pression en fonction de ladite consigne de frein de parking, en vue d'actionner ledit dispositif de commande (23, 24) mobile au moins dans sa position de verrouillage.

4. Système selon l'une des revendications 1 et 2, **caractérisé en ce que** ledit dispositif de commande (123, 124) est configuré pour être actionné électriquement, ladite unité de contrôle et de commande étant en outre configurée pour déterminer une valeur d'une énergie électrique en fonction de ladite consigne de frein de parking, en vue d'actionner ledit dispositif de commande (123, 124) mobile au moins dans sa position de verrouillage.

5. Système selon l'une quelconque des revendications 1 à 4, **caractérisé en ce que** ladite valeur de pression déterminée de ladite deuxième source d'agent de pression pneumatique est supérieure, égale ou inférieure à celle de ladite première source d'agent de pression pneumatique, afin d'appliquer, lorsque ledit frein de parking (7 ; 107) est en configuration de travail, un effort de freinage respectivement supérieur, égal ou inférieur à l'effort de freinage appliqué lorsque ledit piston de freinage (8 ; 108) est dans sa position de freinage de service et que ledit frein de parking (7 ; 107) est dans sa configuration de repos.

6. Système selon l'une quelconque des revendications 1 à 5, **caractérisé en ce que** ladite unité de contrôle et de commande (3) est en outre configurée pour déterminer une valeur corrigée de ladite première source d'agent de pression pneumatique et ladite valeur déterminée de ladite deuxième source d'agent de pression pneumatique est égale à ladite valeur corrigée.

7. Système selon l'une quelconque des revendications 1 à 6, **caractérisé en ce que** ladite valeur déterminée de ladite deuxième source d'agent de pression pneumatique est constante ou variable en fonction de ladite information représentative reçue de ladite valeur de ladite première source d'agent de pression pneumatique.

8. Système selon l'une quelconque des revendications 1 à 7, **caractérisé en ce que** ladite unité de contrôle et de commande (3) est en outre configurée pour recevoir une information représentative d'une consigne de frein de service et pour déterminer ladite consigne de frein de parking en fonction de ladite information représentative reçue de ladite consigne de frein de service.

9. Système selon l'une quelconque des revendications 1 à 8, **caractérisé en ce que** ladite unité de contrôle et de commande (3) est en outre configurée pour recevoir au moins une information représentative d'au moins un paramètre d'utilisation dudit véhicule ferroviaire et ladite valeur de ladite deuxième source d'agent de pression pneumatique est en outre déterminée en fonction de ladite au moins une information représentative dudit au moins un paramètre d'utilisation dudit véhicule ferroviaire.

10. Système selon l'une quelconque des revendications 1 à 9, **caractérisé en ce que** ladite unité de contrôle et de commande (3) est en outre configurée pour recevoir au moins une information représentative d'au moins un paramètre d'utilisation dudit véhicule ferroviaire et pour déterminer ladite consigne de frein de parking en fonction de ladite au moins une information représentative dudit au moins un paramètre d'utilisation dudit véhicule ferroviaire.

11. Système selon l'une des revendications 9 et 10, **caractérisé en ce que** ledit au moins un paramètre d'utilisation dudit véhicule ferroviaire est choisi parmi un paramètre de traction, un paramètre de vitesse, un paramètre de charge, un paramètre d'anti-enrayage, un paramètre de pression pneumatique et un paramètre d'énergie électrique.

12. Système selon l'une quelconque des revendications 1 à 11, **caractérisé en ce que** ladite unité de contrôle et de commande (3) est en communication fluidique avec un réseau de cheminement de conduites pneumatiques (70), lequel réseau comporte une conduite principale et une conduit générale configurées pour acheminer un fluide au moins sous une première pression prédéterminée, optionnellement un premier réservoir auxiliaire (74) configuré pour stocker un fluide sous une deuxième pression prédéterminée et qui est connecté à ladite conduite principale, et/ou optionnellement encore un second réservoir auxiliaire (75) configuré pour stocker un fluide sous une troisième pression prédéterminée et qui est connecté à ladite conduite principale.

13. Système selon la revendication 12, **caractérisé en ce que** ledit réseau de cheminement de conduites pneumatiques comporte en outre une première conduite d'alimentation (72) connectée entre ladite unité de contrôle et de commande (3) et ladite chambre de pression de frein de service et configurée pour acheminer un fluide sous pression issu d'au moins une des première et deuxième sources d'agent de pression pneumatique.

14. Système selon les revendications 3 et 12, **caractérisé en ce que** ledit réseau de cheminement de conduites pneumatiques comporte en outre une deuxième conduite d'alimentation (71) connectée entre ladite unité de contrôle et de commande et ladite chambre de pression de frein de parking et configurée pour acheminer un fluide sous pression issu de la troisième source d'agent de pression pneumatique.

15. Système selon l'une des revendications 13 et 14, **caractérisé en ce que** ledit réseau de cheminement de conduites pneumatiques comporte en outre une conduite intermédiaire dédiée (73) configurée pour acheminer uniquement un fluide issu de ladite deuxième source d'agent de pression pneumatique lorsque ledit frein de parking est en configuration de travail, dans ladite chambre de pression de frein de service.

16. Système selon la revendication 15, **caractérisé en ce que** ladite unité de contrôle et de commande (3) est configurée pour alimenter ladite chambre de pression de frein de service par l'intermédiaire de ladite conduite intermédiaire dédiée (73) en shuntant ladite première conduite d'alimentation (72).

17. Système selon l'une quelconque des revendications 1 à 16, **caractérisé en ce que** ladite unité de contrôle et de commande (3) comporte un dispositif de relayage (90) configuré pour recevoir, en entrée dudit dispositif de relayage (90), une valeur pilote de ladite première source d'agent de pression pneumatique, et pour générer et fournir, en sortie dudit dispositif de relayage (90), ladite valeur de ladite première source d'agent de pression pneumatique ; et ladite unité de contrôle et de commande (3) est en outre configurée pour recevoir, en aval dudit dispositif de relayage (90), une valeur intermédiaire de ladite deuxième source d'agent de pression pneumatique qui se substitue ou se combine à ladite valeur de ladite première source d'agent de pression pneumatique pour générer ladite valeur déterminée de ladite deuxième source d'agent de pression pneumatique.

18. Système selon l'une quelconque des revendications 1 à 16, **caractérisé en ce que** ladite unité de contrôle et de commande (3) comporte un dispositif de relayage (90) configuré pour recevoir, en entrée dudit dispositif de relayage (90), une valeur pilote de ladite première source d'agent de pression pneumatique et une valeur pilote de ladite deuxième source d'agent de pression pneumatique qui se substitue ou se combine à ladite valeur pilote de ladite première source d'agent de pression pneumatique, et pour générer et fournir, en sortie dudit dispositif de relayage (90), ladite valeur déterminée de ladite deuxième source d'agent de pression pneumatique.

19. Système selon l'une quelconque des revendications 1 à 16, **caractérisé en ce que** ladite unité de contrôle et de commande (3) comporte un dispositif de relayage (90) configuré pour :
- recevoir, en entrée dudit dispositif de relayage (90), une valeur pilote de ladite première source d'agent de pression pneumatique ;
- recevoir, dans ledit dispositif de relayage (90), une valeur intermédiaire ou une valeur pilote de ladite deuxième source d'agent de pression pneumatique ; et
- générer et fournir, en sortie dudit dispositif de relayage (90), ladite valeur déterminée de ladite deuxième source d'agent de pression pneumatique.

20. Système selon l'une quelconque des revendications 1 à 19, **caractérisé en ce que** ladite unité de contrôle et de commande (3) comporte un dispositif anti-enrayage (92) et ladite unité de contrôle et de commande (3) est configurée pour générer ladite valeur déterminée de ladite deuxième source d'agent de pression pneumatique à partir de ladite valeur de ladite première source d'agent de pression pneumatique et d'une valeur intermédiaire de ladite deuxième source d'agent de pression pneumatique qui se substitue ou se combine à ladite valeur de ladite première source d'agent de pression pneumatique ; soit en aval soit en amont dudit dispositif anti-enrayage (92).

21. Système selon l'une quelconque des revendications 1 à 20, **caractérisé en ce que** ladite unité de contrôle et de commande (3) comporte en outre un dispositif de génération (94) de la valeur de ladite première source d'agent de pression pneumatique configuré pour recevoir, en entrée dudit dispositif de génération (94), une consigne de frein de service, et pour générer et fournir, en sortie dudit dispositif de génération (94), ladite valeur de ladite première source d'agent de pression pneumatique ; et ladite unité de contrôle et de commande (3) est en outre configurée pour recevoir, en aval dudit dispositif de génération (94), une valeur intermédiaire de ladite deuxième source d'agent de pression pneumatique qui se substitue ou se combine à ladite valeur de ladite première source d'agent de pression pneumatique pour générer ladite valeur déterminée de ladite deuxième source d'agent de pression pneumatique.

22. Système selon l'une quelconque des revendications 1 à 20, **caractérisé en ce que** ladite unité de contrôle et de commande (3) comporte un dispositif de génération (94) de la valeur de ladite première source d'agent de pression pneumatique configuré pour recevoir, en entrée dudit dispositif de génération (94), une consigne de frein de service et une consigne de frein de parking qui se substitue ou se combine à ladite consigne de frein de service, et pour générer et fournir, en sortie dudit dispositif de génération (94), ladite valeur déterminée de ladite deuxième source d'agent de pression pneumatique.

23. Système selon l'une quelconque des revendications 1 à 20, **caractérisé en ce que** ladite unité de contrôle et de commande (3) comporte un dispositif de génération (94) de la valeur de ladite première source d'agent de pression pneumatique configuré pour :
- recevoir, en entrée dudit dispositif de génération (94), une consigne de frein de service ;
- recevoir, dans ledit dispositif de génération (94), une consigne de frein de parking ou une valeur intermédiaire de ladite deuxième source d'agent de pression pneumatique ; et
- générer et fournir, en sortie dudit dispositif de génération (94), ladite valeur déterminée de ladite deuxième source d'agent de pression pneumatique.

24. Système selon l'une quelconque des revendications 1 à 23, **caractérisé en ce que** ladite unité de contrôle et de commande (3) est en outre configurée pour :
- recevoir au moins une information représentative d'un paramètre de charge dudit véhicule ;
- déterminer un paramètre de charge fictive dudit véhicule en fonction de ladite consigne de frein de parking et/ou de ladite valeur déterminée de ladite deuxième source d'agent de pression pneumatique ; et
- substituer ledit paramètre de charge reçu par ledit paramètre de charge fictive déterminé.

25. Procédé de freinage d'un véhicule ferroviaire comportant un système de freinage ferroviaire (1) selon l'une quelconque des revendications 1 à 24, comportant :
- l'étape de recevoir une information représentative d'une valeur de ladite première source d'agent de pression pneumatique ;
- l'étape d'alimenter la chambre de pression de frein de service (13 ; 113) dudit système (1) avec ladite valeur de ladite première source d'agent de pression pneumatique de sorte à mettre ledit piston de freinage (8 ; 108) en position de freinage de service ;
- l'étape de traiter une information représentative d'une consigne de frein de parking au moins dans sa configuration de travail ;
- l'étape d'actionner ledit dispositif de commande (23, 24 ; 123, 124) mobile au moins dans sa position de verrouillage en fonction de ladite consigne de frein de parking ; et
- l'étape de déterminer une valeur de ladite deuxième source d'agent de pression pneumatique en fonction de ladite consigne de frein de parking et de ladite information représentative d'une valeur de ladite première source d'agent de pression pneumatique, en vue d'alimenter ladite chambre de pression de frein de service (13 ; 113).

26. Procédé selon la revendication 25, **caractérisé en ce qu'**il comporte en outre l'étape d'alimenter ladite chambre de pression de frein de service (13 ; 113) avec ladite valeur de ladite deuxième source d'agent de pression pneumatique ; et l'étape de vidanger de ladite chambre de pression de frein de service (13 ; 113).

## Patentansprüche

1. Schienenbremssystem für Schienenfahrzeuge mit Bremsen mit zumindest einem Belag oder zumindest einer Sohle (5), enthaltend:
- einen Körper (2; 102);
- ein Bremsgestänge (4), das dazu ausgelegt ist, auf zumindest eine Bremse mit zumindest einem Belag oder zumindest einer Sohle (5) einzuwirken;
- eine Betriebsbremse (6; 106) mit einem Bremskolben (8; 108), der bezüglich des Körpers (2; 102) beweglich ist, um auf das Bremsgestänge (4) einzuwirken, und mit dem Körper (2; 102) eine Betriebsbremsendruckkammer (13; 113) begrenzt, die dazu ausgelegt ist, über eine erste pneumatische Druckmittelquelle versorgt zu werden, um den Bremskolben (8, 108) in eine Betriebsbremsposition zu bringen; und
- eine Feststellbremse (7; 107), die dazu ausgelegt ist, auf den Bremskolben (8; 108) der Betriebsbremse (6; 106) einzuwirken, und eine Arbeitskonfiguration und eine Ruhekonfiguration annimmt;
wobei das Schienenbremssystem (1) **dadurch gekennzeichnet ist, dass** die Feststellbremse (7; 107) enthält:
- eine Blockiervorrichtung (20; 120), die bezüglich des Körpers (2; 102) beweglich ist, um auf den Bremskolben (8; 108) einzuwirken, und eine erste Position und eine zweite Position annimmt, in welcher die Blockiervorrichtung (20; 120) dazu ausgelegt ist, den Bremskolben (8; 108) in Betriebsbremsposition festzulegen, wobei die Feststellbremse (7; 107) dann in Arbeitskonfiguration ist;
- eine Steuervorrichtung (23, 24; 123, 124), die bezüglich des Körpers (2; 102) beweglich ist und eine Verriegelungsposition annimmt, in welcher die Steuervorrichtung (23, 24; 123, 124) dazu ausgelegt ist, die Blockiervorrichtung (20; 120) in ihrer zweiten Position zu halten;
wobei das Schienenbremssystem (1) dazu ausgelegt ist, dann, wenn die Steuervorrichtung (23, 24; 123, 124) in ihrer Verrieglungsposition ist, die Betriebsbremsdruckkammer (13; 113) über eine zweite pneumatische Druckmittelquelle zu versorgen, deren Druckwert so bestimmt ist, dass dann, wenn die Feststellbremse (7; 107) in Arbeitskonfiguration ist, eine bestimmte Bremskraft aufgebracht wird;
wobei das Schienenbremssystem (1) ferner eine Kontroll- und Steuereinheit (3) enthält, die dazu ausgelegt ist,
- eine für einen Wert der ersten pneumatischen Druckmittelquelle repräsentative Information zu empfangen;
- eine für einen Sollwert der Feststellbremse zumindest in ihrer Arbeitskonfiguration repräsentative Information zu verarbeiten, um die bewegliche Steuervorrichtung (23, 24; 123, 124) zumindest in ihrer Verriegelungsposition zu betätigen; und
- einen Wert der zweiten pneumatischen Druckmittelquelle in Abhängigkeit von dem Sollwert der Feststellbremse und von der für einen Wert der ersten pneumatischen Druckmittelquelle repräsentativen Information zu bestimmen, um die Betriebsbremsendruckkammer (13; 113) zu versorgen.

2. System nach Anspruch 1, **dadurch gekennzeichnet, dass** die für den Wert der ersten pneumatischen Druckmittelkammer repräsentative Information und die für den Sollwert der Feststellbremse repräsentative Information jeweils einem elektrischen oder pneumatischen oder mechanischen Signal entsprechen.

3. System nach einem der Ansprüche 1 und 2, **dadurch gekennzeichnet, dass** die Steuervorrichtung (23, 24) mit dem Körper (2) eine Feststellbremsendruckkamer (25) begrenzt, die dazu ausgelegt ist, über eine dritte pneumatische Druckmittelquelle versorgt zu werden, wobei die Kontroll- und Steuereinheit (3) ferner dazu ausgelegt ist, einen Wert der dritten Druckmittelquelle in Abhängigkeit von dem Sollwert der Feststellbremse zu bestimmen, um die bewegliche Steuervorrichtung (23, 24) zumindest in ihrer Verriegelungsposition zu betätigen.

4. System nach einem der Ansprüche 1 und 2, **dadurch gekennzeichnet, dass** die Steuervorrichtung (123, 124) dazu ausgelegt ist, elektrisch betätigt zu werden, wobei die Kontroll- und Steuereinheit ferner dazu ausgelegt ist, einen Wert einer elektrischen Energie in Abhängigkeit von dem Sollwert der Feststellbremse zu bestimmen, um die bewegliche Steuervorrichtung (123, 124) zumindest in ihrer Verrieglungsposition zu betätigen.

5. System nach einem der Ansprüche 1 bis 4, **dadurch gekennzeichnet, dass** der bestimmte Druckwert der zweiten pneumatischen Druckmittelquelle größer, gleich oder kleiner als der der ersten pneumatischen Druckmittelquelle ist, um dann, wenn die Feststellbremse (7; 107) in Arbeitskonfiguration ist, eine größere, gleiche bzw. kleinere Bremskraft als die Bremskraft aufzubringen, die dann aufgebracht wird, wenn der Bremskolben (8; 108) in seiner Betriebsbremsposition ist und die Feststellbremse (7; 107) in ihrer Ruhekonfiguration ist.

6. System nach einem der Ansprüche 1 bis 5, **dadurch gekennzeichnet, dass** die Kontroll- und Steuereinheit (3) ferner dazu ausgelegt ist, einen korrigierten Wert der ersten pneumatischen Druckmittelquelle zu bestimmen, wobei der bestimmte Wert der zweiten pneumatischen Druckmittelquelle gleich dem korrigierten Wert ist.

7. System nach einem der Ansprüche 1 bis 6, **dadurch gekennzeichnet, dass** der bestimmte Wert der zweiten pneumatischen Druckmittelquelle konstant oder in Abhängigkeit von der empfangenen, für den Wert der ersten pneumatischen Druckmittelquelle repräsentativen Information variabel ist.

8. System nach einem der Ansprüche 1 bis 7, **dadurch gekennzeichnet, dass** die Kontroll- und Steuereinheit (3) ferner dazu ausgelegt ist, eine für einen Sollwert der Betriebsbremse repräsentative Information zu empfangen und den Sollwert der Feststellbremse in Abhängigkeit von der empfangenen, für den Sollwert der Betriebsbremse repräsentativen Information zu bestimmen.

9. System nach einem der Ansprüche 1 bis 8, **dadurch gekennzeichnet, dass** die Kontroll- und Steuereinheit (3) ferner dazu ausgelegt ist, zumindest eine für zumindest einen Einsatzparameter des Schienenfahrzeugs repräsentative Information zu empfangen, wobei der Wert der zweiten pneumatischen Druckmittelquelle ferner in Abhängigkeit von der zumindest einen für den zumindest einen Einsatzparameter des Schienenfahrzeugs repräsentativen Information bestimmt wird.

10. System nach einem der Ansprüche 1 bis 9, **dadurch gekennzeichnet, dass** die Kontroll- und Steuereinheit (3) ferner dazu ausgelegt ist, zumindest eine für zumindest einen Einsatzparameter des Schienenfahrzeugs repräsentative Information zu empfangen und den Sollwert der Feststellbremse in Abhängigkeit von der zumindest einen für den zumindest einen Einsatzparameter des Schienenfahrzeugs repräsentativen Information zu bestimmen.

11. System nach einem der Ansprüche 9 und 10, **dadurch gekennzeichnet, dass** der zumindest eine Einsatzparameter des Schienenfahrzeugs ausgewählt ist aus einem Zugkraftparameter, einem Geschwindigkeitsparameter, einem Ladungsparameter, einem Antischlupfparamater, einem Pneumatikdruckparameter und einem Parameter für elektrische Energie.

12. System nach einem der Ansprüche 1 bis 11, **dadurch gekennzeichnet, dass** die Kontroll- und Steuereinheit (3) in Strömungsverbindung mit einem Fördernetz aus Druckluftleitungen (70) ist, wobei das Netz eine Hauptluftbehälterleitung und eine Hauptluftleitung enthält, die dazu ausgelegt sind, zumindest ein Fluid unter einem ersten vorbestimmten Druck zu fördern, optional einen ersten Hilfsvorratsbehälter (74), der dazu ausgelegt ist, ein Fluid unter einem zweiten vorbestimmten Druck zu speichern, und mit der Hauptluftbehälterleitung verbunden ist, und/oder optional auch einen zweiten Hilfsvorratsbehälter (75), der dazu ausgelegt ist, ein Fluid unter einem dritten vorbestimmten Druck zu speichern, und der mit der Hauptluftbehälterleitung verbunden ist.

13. System nach Anspruch 12, **dadurch gekennzeichnet, dass** das Fördernetz aus Druckluftleitungen ferner eine erste Versorgungsleitung (72) enthält, die zwischen der Kontroll- und Steuereinheit (3) und der Betriebsbremsdruckkammer angeschlossen und dazu ausgelegt ist, ein Fluid unter Druck zu fördern, das aus zumindest einer aus erster und zweiter pneumatischer Druckmittelquelle stammt.

14. System nach den Ansprüchen 3 und 12, **dadurch gekennzeichnet, dass** das Fördernetz aus Druckluftleitungen ferner eine zweite Versorgungsleitung (71) enthält, die zwischen der Kontroll- und Steuereinheit (3) und der Feststellbremsdruckkammer angeschlossen und dazu ausgelegt ist, ein Fluid unter Druck zu fördern, das aus der dritten pneumatischen Druckmittelquelle stammt.

15. System nach einem der Ansprüche 13 und 14, **dadurch gekennzeichnet, dass** das Fördernetz aus Druckluftleitungen ferner eine zugeordnete Zwischenleitung (73) enthält, die dazu ausgelegt ist, nur ein Fluid aus der zweiten pneumatischen Druckmittelquelle in die Betriebsbremsdruckkammer dann zu fördern, wenn die Feststellbremse in Arbeitskonfiguration ist.

16. System nach Anspruch 15, **dadurch gekennzeichnet, dass** die Kontroll- und Steuereinheit (3) dazu ausgelegt ist, die Betriebsbremsdruckkammer über die zugeordnete Zwischenleitung (73) zu versorgen, indem die erste Versorgungsleitung (72) umgangen wird.

17. System nach einem der Ansprüche 1 bis 16, **dadurch gekennzeichnet, dass** die Kontroll- und Steuereinheit (3) eine Weiterleitungsvorrichtung (90) enthält, die dazu ausgelegt ist, am Eingang der Weiterleitungsvorrichtung (90) einen Leitwert der ersten pneumatischen Druckmittelquelle zu empfangen und am Ausgang der Weiterleitungsvorrichtung (90) den Wert der ersten pneumatischen Druckmittelquelle zu erzeugen und bereitzustellen; wobei die Kontroll- und Steuereinheit (3) ferner dazu ausgelegt ist, der Weiterleitungsvorrichtung (90) nachgelagert einen Zwischenwert der zweiten pneumatischen Druckmittelquelle zu empfangen, der mit dem Wert der ersten pneumatischen Druckmittelquelle ersetzt oder kombiniert wird, um den bestimmten Wert der zweiten pneumatischen Druckmittelquelle zu erzeugen.

18. System nach einem der Ansprüche 1 bis 16, **dadurch gekennzeichnet, dass** die Kontroll- und Steuereinheit (3) eine Weiterleitungsvorrichtung (90) enthält, die dazu ausgelegt ist, um am Eingang der Weiterleitungsvorrichtung (90) einen Leitwert der ersten pneumatischen Druckmittelquelle und einen Leitwert der zweiten pneumatischen Druckmittelquelle zu empfangen, der mit dem Leitwert der ersten pneumatischen Druckmittelquelle ersetzt oder kombiniert wird, und um am Ausgang der Weiterleitungsvorrichtung (90) den bestimmten Wert der zweiten pneumatischen Druckmittelquelle zu erzeugen und bereitzustellen.

19. System nach einem der Ansprüche 1 bis 16, **dadurch gekennzeichnet, dass** die Kontroll- und Steuereinheit (3) eine Weiterleitungsvorrichtung (90) enthält, die dazu ausgelegt ist,
- am Eingang der Weiterleitungsvorrichtung (90) einen Leitwert der ersten pneumatischen Druckmittelquelle zu empfangen;
- in der Weiterleitungsvorrichtung (90) einen Zwischenwert oder einen Leitwert der zweiten pneumatischen Druckmittelquelle zu empfangen; und
- am Ausgang der Weiterleitungsvorrichtung (90) den bestimmten Wert der zweiten pneumatischen Druckmittelquelle zu erzeugen und bereitzustellen.

20. System nach einem der Ansprüche 1 bis 19, **dadurch gekennzeichnet, dass** die Kontroll- und Steuereinheit (3) eine Antischlupfvorrichtung (92) enthält und die Kontroll- und Steuereinheit (3) dazu ausgelegt ist, den bestimmten Wert der zweiten pneumatischen Druckmittelquelle ausgehend von dem Wert der ersten pneumatischen Druckmittelquelle und eines Zwischenwerts der zweiten pneumatischen Druckmittelquelle zu erzeugen, der mit dem Wert der ersten pneumatischen Druckmittelquelle ersetzt oder kombiniert wird, und zwar der Antischlupfvorrichtung (92) entweder nachgelagert oder vorgelagert.

21. System nach einem der Ansprüche 1 bis 20, **dadurch gekennzeichnet, dass** die Kontroll- und Steuereinheit (3) ferner eine Erzeugungsvorrichtung (94) zum Erzeugen des Werts der ersten pneumatischen Druckmittelquelle enthält, die dazu ausgelegt ist, am Eingang der Erzeugungsvorrichtung (94) einen Betriebsbremsensollwert zu empfangen und am Ausgang der Erzeugungsvorrichtung (94) den Wert der ersten pneumatischen Druckmittelquelle zu erzeugen und bereitzustellen; wobei die Kontroll- und Steuereinheit (3) ferner dazu ausgelegt ist, der Erzeugungsvorrichtung (94) nachgelagert einen Zwischenwert der zweiten pneumatischen Druckmittelquelle zu empfangen, der mit dem Wert der ersten pneumatischen Druckmittelquelle ersetzt oder kombiniert wird, um den bestimmten Wert der zweiten pneumatischen Druckmittelquelle zu erzeugen.

22. System nach einem der Ansprüche 1 bis 20, **dadurch gekennzeichnet, dass** die Kontroll- und Steuereinheit (3) eine Erzeugungsvorrichtung (94) zum Erzeugen des Werts der ersten pneumatischen Druckmittelquelle enthält, die dazu ausgelegt ist, um am Eingang der Erzeugungsvorrichtung (94) einen Betriebsbremsensollwert und einen Feststellbremsensollwert zu empfangen, der mit dem Betriebsbremsensollwert ersetzt oder kombiniert wird, und um am Ausgang der Erzeugungsvorrichtung (94) den bestimmten Wert der zweiten pneumatischen Druckmittelquelle zu erzeugen und bereitzustellen.

23. System nach einem der Ansprüche 1 bis 20, **dadurch gekennzeichnet, dass** die Kontroll- und Steuereinheit (3) eine Erzeugungsvorrichtung (94) zum Erzeugen des Werts der ersten pneumatischen Druckmittelquelle enthält, die dazu ausgelegt ist,
- am Eingang der Erzeugungsvorrichtung (94) einen Betriebsbremsensollwert zu empfangen;
- in der Erzeugungsvorrichtung (94) einen Feststellbremsensollwert oder einen Zwischenwert der zweiten pneumatischen Druckmittelquelle zu empfangen; und
- am Ausgang der Erzeugungsvorrichtung (94) den bestimmten Wert der zweiten pneumatischen Druckmittelquelle zu erzeugen und bereitzustellen.

24. System nach einem der Ansprüche 1 bis 23, **dadurch gekennzeichnet, dass** die Kontroll- und Steuereinheit (3) ferner dazu ausgelegt ist,
- zumindest eine für einen Ladungsparameter des Fahrzeugs repräsentative Information zu empfangen;
- einen fiktiven Ladungsparameter des Fahrzeugs in Abhängigkeit von dem Feststellbremsensollwert und/oder von dem bestimmten Wert der zweiten pneumatischen Druckmittelquelle zu bestimmen; und
- den empfangenen Ladungsparameter mit dem bestimmten fiktiven Ladungsparameter zu ersetzen.

25. Verfahren zum Bremsen eines Schienenfahrzeugs mit einem Schienenbremssystem (1) nach einem der Ansprüche 1 bis 24, umfassend:
- den Schritt des Empfangens von einer für einen Wert der ersten pneumatischen Druckmittelquelle repräsentativen Information;
- den Schritt des Versorgens der Betriebsbremsendruckkammer (13; 113) des Systems (1) mit dem Wert der ersten pneumatischen Druckmittelquelle, so dass der Bremskolben (8; 108) in Betriebsbremsposition gebracht wird;
- den Schritt des Verarbeitens einer für einen Sollwert der Feststellbremse repräsentativen Information zumindest in ihrer Arbeitskonfiguration;
- den Schritt des Betätigens der beweglichen Steuervorrichtung (23, 24; 123, 124) zumindest in ihrer Verrieglungsposition in Abhängigkeit von dem Sollwert der Feststellbremse; und
- den Schritt des Bestimmens von einem Wert der zweiten pneumatischen Druckmittelquelle in Abhängigkeit von dem Sollwert der Feststellbremse und der für einen Wert der ersten pneumatischen Druckmittelquelle repräsentativen Information, um die Betriebsbremsendruckkammer (13; 113) zu versorgen.

26. Verfahren nach Anspruch 25, **dadurch gekennzeichnet, dass** es ferner den Schritt des Versorgens der Betriebsbremsendruckkammer (13; 113) mit dem Wert der zweiten pneumatischen Druckmittelquelle; und den Schritt des Ablassens der Betriebsbremsendruckkammer (13; 113) umfasst.

## Claims

1. A rail vehicle braking system with brakes that have at least one lining or at least one block (5), comprising:
- a body (2 ; 102);
- a braking linkage (4) configured to act on at least one said brake that has at least one lining or at least one block (5);
- a service brake (6 ; 106) comprising a braking piston (8 ; 108) which is movable relative to said body (2 ; 102) to act on said braking linkage (4) and delimits with said body (2 ; 102) a service brake pressure chamber (13 ; 113) configured to be supplied by a first source of pneumatic pressure agent to put said braking piston (8 ; 108) into a service braking position; and
- a parking brake (7 ; 107) configured to act on said braking piston (8 ; 108) of said service brake (6 ; 106) and having a working configuration and a resting configuration;
said rail vehicle braking system (1) being **characterized in that** said parking brake (7 ; 107) comprises:
- a blocking device (20 ; 120) which is movable relative to said body (2 ; 102) to act on said braking piston (8 ; 108) and having a first position and a second position in which said blocking device (20 ; 120) is configured to immobilize said braking piston (8 ; 108) in service braking position, said parking brake (7 ; 107) then being in working configuration;
- an actuating device (23, 24 ; 123, 124) which is movable relative to said body (2 ; 102) and having a locking position in which said actuating device (23, 24 ; 123, 124) is configured to hold said blocking device (20 ; 120) in its second position;
said rail vehicle braking system (1) being configured such that, when said actuating device (23, 24 ; 123, 124) is in its locking position, said service brake pressure chamber (13 ; 113) is supplied by a second source of pneumatic pressure agent of which the pressure value is determined, in order to apply, when said parking brake (7 ; 107) is in working configuration, a determined braking force;
said rail vehicle braking system (1) further comprising a control and actuation unit (3) configured to:
- receive an information item representing a value of said first source of pneumatic pressure agent;
- process an information item representing a parking brake setting at least in its working configuration, for the purpose of actuating said movable actuating device (23, 24 ; 123, 124) at least in its locking position; and
- determine a value of said second source of pneumatic pressure agent according to said parking brake setting and said information item representing a value of said first source of pneumatic pressure agent, for the purpose of supplying said service brake pressure chamber (13 ; 113).

2. A system according to claim 1, **characterized in that** said information item representing said value of said first source of pneumatic pressure agent and said information item representing said parking brake setting each correspond to an electrical or pneumatic or mechanical signal.

3. A system according to one of claims 1 and 2, **characterized in that** said actuating device (23, 24) delimits with said body (2) a parking brake pressure chamber (25) configured to be supplied by a third source of pneumatic pressure agent, said control and actuation unit (3) being furthermore configured to determine a value of said third source of pressure agent according to said parking brake setting, for the purpose of actuating said movable actuating device (23, 24) at least in its locking position.

4. A system according to one of claims 1 and 2, **characterized in that** said actuating device (123, 124) is configured to be electrically actuated, said control and actuation unit being furthermore configured to determine an electrical energy value according to said parking brake setting, for the purpose of actuating said movable actuating device (123, 124) at least in its locking position.

5. A system according to any one of claims 1 to 4, **characterized in that** said determined pressure value of said second source of pneumatic pressure agent is greater than, equal to or less than that of said first source of pneumatic pressure agent, in order to apply, when said parking brake (7 ; 107) is in working configuration, a braking force respectively greater than, equal to or less than the braking force applied when said braking piston (8 ; 108) is in its service braking position and said parking brake (7 ; 107) is in its resting configuration.

6. A system according to any one of claims 1 to 5, **characterized in that** said control and actuation unit (3) is furthermore configured to determine a corrected value of said first source of pneumatic pressure agent and said determined value of said second source of pneumatic pressure agent is equal to said corrected value.

7. A system according to any one of claims 1 to 6, **characterized in that** said determined value of said second source of pneumatic pressure agent is constant or variable according to said received information item representing said value of said first source of pneumatic pressure agent.

8. A system according to any one of claims 1 to 7, **characterized in that** said control and actuation unit (3) is furthermore configured to receive an information item representing a service brake setting and to determine said parking brake setting according to said received information item representing said service brake setting.

9. A system according to any one of claims 1 to 8, **characterized in that** said control and actuation unit (3) is furthermore configured to receive at least one information item representing at least one parameter of use of said rail vehicle and said value of said second source of pneumatic pressure agent is furthermore determined according to said at least one information item representing of said at least one parameter of use of said rail vehicle.

10. A system according to any one of claims 1 to 9, **characterized in that** said control and actuation unit (3) is furthermore configured to receive at least one information item representing at least one parameter of use of said rail vehicle and to determine said parking brake setting according to said at least one information item representing said at least one parameter of use of said rail vehicle.

11. A system according to one of claims 9 and 10, **characterized in that** said at least one parameter of use of said rail vehicle is chosen from a traction parameter, a velocity parameter, a load parameter, an anti-wheel-slide parameter, a pneumatic pressure parameter and an electrical energy parameter.

12. A system according to any one of claims 1 to 11, **characterized in that** said control and actuation unit (3) is in fluidic communication with a conveyance network of pneumatic pipes (70), which network comprises a main pipe and a general pipe which are configured to convey a fluid at least at a predetermined first pressure, optionally a first auxiliary reservoir (74) configured to store a fluid at a predetermined second pressure and which is connected to said main pipe, and/or also optionally a second auxiliary reservoir (75) configured to store a fluid at a predetermined third pressure and which is connected to said main pipe.

13. A system according to claim 12, **characterized in that** said conveyance network of pneumatic pipes further comprises a first supply pipe (72) connected between said control and actuation unit (3) and said service brake pressure chamber and configured to convey a fluid at a pressure coming from at least one of the first and second sources of pneumatic pressure agent.

14. A system according to claims 3 and 12, **characterized in that** said conveyance network of pneumatic pipes further comprises a second supply pipe (71) connected between said control and actuation unit and said parking brake pressure chamber and configured to convey a fluid at a pressure coming from the third source of pneumatic pressure agent.

15. A system according to one of claims 13 and 14, **characterized in that** said conveyance network of pneumatic pipes further comprises a dedicated intermediate pipe (73) configured to convey solely a fluid coming from said second source of pneumatic pressure agent when said parking brake is in working configuration, into said service brake pressure chamber.

16. A system according to claim 15, **characterized in that** said control and actuation unit (3) is configured to supply said service brake pressure chamber via said dedicated intermediate pipe (73) by shunting said first supply pipe (72).

17. A system according to any one of claims 1 to 16, **characterized in that** said control and actuation unit (3) comprises a relay device (90) configured to receive, as input to relay device (90), a template value of said first source of pneumatic pressure agent, and to generate and provide, as output from said relay device (90), said value of said first source of pneumatic pressure agent; and said control and actuation unit (3) is furthermore configured to receive, downstream of said relay device (90), an intermediate value from said second source of pneumatic pressure agent which substitutes for or combines with said value of said first source of pneumatic pressure agent to generate said determined value of said second source of pneumatic pressure agent.

18. A system according to any one of claims 1 to 16, **characterized in that** said control and actuation unit (3) comprises a relay device (90) configured to receive, as input to said relay device (90), a template value of said first source of pneumatic pressure agent and a template value of said second source of pneumatic pressure agent which substitutes for or combines with said template value of said first source of pneumatic pressure agent, and to generate and provide, as output from said relay device (90), said determined value of said second source of pneumatic pressure agent.

19. A system according to any one of claims 1 to 16, **characterized in that** said control and actuation unit (3) comprises a relay device (90) configured to:
- receive, as input to said relay device (90), a template value of said first source of pneumatic pressure agent;
- receive, in said relay device (90), an intermediate value or a template value of said second source of pneumatic pressure agent; and
- generate and provide, as output from said relay device (90), said determined value of said second source of pneumatic pressure agent.

20. A system according to any one of claims 1 to 19, **characterized in that** said control and actuation unit (3) comprises an anti-wheel-slide device (92) and said control and actuation unit (3) is configured to generate said determined value of said second source of pneumatic pressure agent based on said value of said first source of pneumatic pressure agent and an intermediate value of said second source of pneumatic pressure agent which substitutes for or combines with said value of said first source of pneumatic pressure agent, either downstream or upstream of said anti-wheel-slide device (92).

21. A system according to any one of claims 1 to 20, **characterized in that** said control and actuation unit (3) further comprises a generating device (94) for generating the value of said first source of pneumatic pressure agent configured to receive, as input to said generating device (94), a service brake setting, and to generate and provide, as output from said generating device (94), said value of said first source of pneumatic pressure agent; and said control and actuation unit (3) is furthermore configured to receive, downstream of said generating device (94), an intermediate value of said second source of pneumatic pressure agent which substitutes for or combines with said value of said first source of pneumatic pressure agent to generate said determined value of said second source of pneumatic pressure agent.

22. A system according to any one of claims 1 to 20, **characterized in that** said control and actuation unit (3) comprises a generating device (94) for generating the value of said first source of pneumatic pressure agent configured to receive, as input to said generating device (94), a service brake setting and a parking brake setting which substitutes for or combines with said service brake setting, and to generate and provide, as output from said generating device (94), said determined value of said second source of pneumatic pressure agent.

23. A system according to any one of claims 1 to 20, **characterized in that** said control and actuation unit (3) comprises a generating device (94) for generating the value of said first source of pneumatic pressure agent configured to:
- receive, as input to said generating device (94), a service brake setting;
- receive, in said generating device (94), a parking brake setting or an intermediate value of said second source of pneumatic pressure agent; and
- generate and provide, as output from said generating device (94), said determined value of said second source of pneumatic pressure agent.

24. A system according to any one of claims 1 to 23, **characterized in that** said control and actuation unit (3) is furthermore configured to:
- receive at least one information item representing a load parameter of said vehicle;
- determine a fictional load parameter of said vehicle according to said parking brake setting and/or said determined value of said second source of pneumatic pressure agent; and
- substitute said received load parameter with said determined fictional load parameter.

25. A method of braking a rail vehicle comprising a rail vehicle braking system (1) according to any one of claims 1 to 24, comprising:
- the step of receiving an information item representing a value of said first source of pneumatic pressure agent;
- the step of supplying the service brake pressure chamber (13 ; 113) of said system (1) with said value of said first source of pneumatic pressure agent so as to put said braking piston (8 ; 108) in service braking position;
- the step of processing an information item representing a parking brake setting at least in its working configuration;
- the step of actuating said movable actuating device (23, 24 ; 123, 124) at least in its locking position according to said parking brake setting; and
- the step of determining a value of said second source of pneumatic pressure agent according to said parking brake setting and said information item representing a value of said first source of pneumatic pressure agent, for the purpose of supplying said service brake pressure chamber (13 ; 113).

26. A method according to claim 25, **characterized in that** it further comprises the step of supplying said service brake pressure chamber (13 ; 113) with said value of said second source of pneumatic pressure agent; and the step of venting said service brake pressure chamber (13 ; 113).
